Europäisches Patentamt

European Patent Office

Office européen des brevets

(19)

(11) EP 0 407 919 B1

(12) # EUROPEAN PATENT SPECIFICATION

(45) Date of publication and mention
of the grant of the patent:
**24.04.1996 Bulletin 1996/17**

(51) Int Cl.$^6$: **H04B 10/18, H04B 10/14**

(21) Application number: **90112993.2**

(22) Date of filing: **07.07.1990**

(54) **Optical transmitters linearized by means of parametric feedback**

Optische Sender, linearisiert durch parametrische Rückkopplung

Emetteurs optiques linéarisés au moyen de contre-réaction paramétrique

(84) Designated Contracting States:
**AT BE CH DE DK ES FR GB GR IT LI LU NL SE**

(30) Priority: **11.07.1989 US 378328**

(43) Date of publication of application:
**16.01.1991 Bulletin 1991/03**

(73) Proprietor: **HARMONIC LIGHTWAVES, INC.**
**Santa Clara, CA 95054 (US)**

(72) Inventors:
 • **Nazarathy, Moshe**
  **Palo Alto CA. 94303 (US)**
 • **Berger, Josef**
  **116, Santa Clara, CA 95051 (US)**
 • **Kagan, Yishai**
  **64, Santa Clara, CA 95051 (US)**

(74) Representative: **Sparing Röhl Henseler**
**Patentanwälte**
**Postfach 14 04 43**
**D-40074 Düsseldorf (DE)**

(56) References cited:
 **EP-A- 0 304 602      GB-A- 2 025 121**
 **GB-A- 2 150 383**

 • **IOOC/83, TECHNICAL DIGEST, Tokyo, 27th - 30th June 1983, pages 378-379; M. BERTELSMEIER et al.: "Linerization of light emitting and laser diodes for analog broadband applications by adaptive predistortion"**
 • **PATENT ABSTRACTS OF JAPAN, vol. 12, no. 452 (E-687)[3299], 28th November 1988 & JP-A-63 178 632**
 • **PATENT ABSTRACTS OF JAPAN, vol. 9, no. 102 (E-312)[1825], 4th May 1985 & JP-A-59 229 938**
 • **PROCEEDINGS OF THE 18th EUROPEAN MICROWAVE CONFERENCE, 12-15 September 1988, Stockholm, SE, in association with Microwave Exhibitions and Publishers Ltd, Tunbridge Wells, GB; pages 1017-1022; R.D. STEWART et al.: "Predistortion linearisation of amplifiers for UHF mobile radio"**
 • **TELECOMMUNICATIONS AND RADIO ENGINEERING, vol. 44, no. 7, July 1989, Scripta Technica, Inc. NEW YORK, US; pages 119-122; I.V. KALMYKOV et al.: "A method of compensating the nonlinear distortions of light-emitting and laser diodes in broadband analog communications systems"**
 • **ELECTRONICS & COMMUNICATIONS IN JAPAN, vol. 67, no. 5, May 1984, SILVER SPRING, Maryland, US; Scripta Publ. Co.; pages 57-66; T. NOJIMA et al.: "Predistortion nonlinear compensator for microwave SSB-AM system"**

EP 0 407 919 B1

## Description

INTRODUCTION

Although digital communication has been gaining in importance, analog signal transmission is still an important transmission method, particularly in regard to the distribution of video signals. The broadcast distribution of television signals and the distribution of television signals via cable are most obvious examples of analog communications. At the high bandwidths required for video signals, the attenuation of transmission lines such as coaxial cable and the bandwidth of repeater amplifiers are significant factors dictating the use of the transmission format which best preserves bandwidth, namely Amplitude Modulation (AM). In particular, AM-vestigial sideband (AM-VSB) modulation is used in television. The penalty to be paid for the reduced bandwidth of AM as compared to digital transmission is a higher signal to noise ratio required for AM transmission (about 30 dB more than for digital transmission).

In particular, fiber optical transmission has been considered for cable television (CATV) systems as a means to transmit AM/frequency division multiplexed (AM/FDM) signals over longer distances, without repeaters, as described by J. Koscinski, "Feasibility of Multichannel VSB/AM Transmission on Fiber Optic Links," NTCA Technical papers, Las Vegas 1987, p. 17. Such fiber optic AM links apply optical intensity modulation upon a light source, sending the modulated light signal via fiber to a receiver which converts the optical intensity signal back to an electrical signal. The modulating electrical signal is a composite signal with the AM video channels multiplexed in frequency, hence the term AM/FDM.

The useful length of a fiber optic analog link is determined by factors such as the optical power available, the relative intensity noise (RIN) of the optical source (which is typically a laser), and the sensitivity of the optical receiver. Also of importance is the non-linearity of the modulation characteristics of the optical source. Second order and third order distortion cause cross-talk, intermodulation distortion, and interference among the transmitted channels.

With present technology, the limiting factors for optical AM links used for cable television transmission are the RIN of the laser source and the second order distortion resulting from the light-current modulation characteristics.

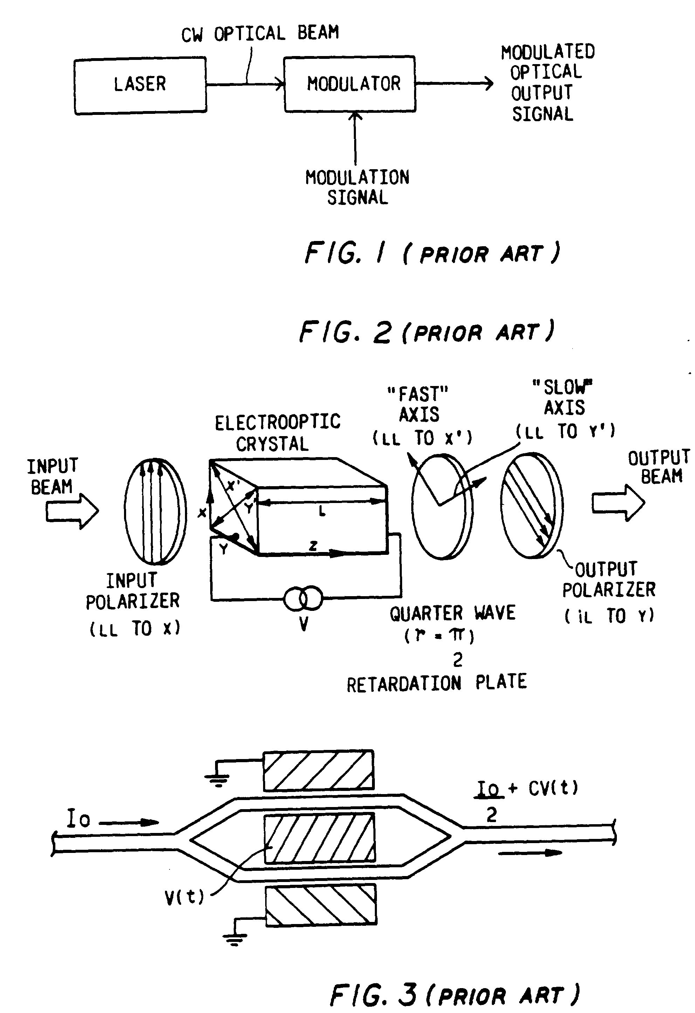

External modulation of the light source has been proposed and demonstrated for analog transmission via fiber, as described by W. E. Stephens and R. Joseph, "System Characteristics of Direct Modulated and Externally Modulated RF Fiber-Optic Links", Journal Lightwave Technol., Vol. LT-5, pp. 180-387, 1987. When using an externally modulated light source, as shown in Figure 1, the laser is run in the continuous wave (CW) mode, i.e. at constant output power into an optical modulator, which also has an electrical input port. The resulting optical output signal from the optical modulator is a modulated light beam, with an optical intensity envelope that is a replica of the modulating electrical signal.

Typical prior art electro-optic amplitude modulators are described by Amnon Yariv and Pochi Yeh, "Optical Waves in Crystals", (Ch. 7: Electro-optics, Ch. 11: Guided waves and integrated optics), Wiley, 1984: R. Alferness, "Titanium Diffused Lithium Niobate Waveguide Devices", in "Guided-Wave Optoelectronics", Tamir ed., Springer-Verlag, 1988. Such a typical prior art amplitude modulator may be structured as either a phase modulator between crossed polarizers (Fig. 2), or an interferometric device superposing the outputs of two phase modulators (Fig. 3), i.e. a Mach-Zehnder interferometer. In turn, an electro-optic phase modulator is constructed by passing the optical beam through a material which is electro-optic, i.e. when an electric field is applied to it, the refractive index of the material and thus the speed of light and the time of flight delay, changes linearly with the applied voltage.

Of particular interest are integrated-optic modulators, where the electro-optic interactions occur in optical waveguides that are patterned into optical substrates via microlithographic techniques. Such integrated-optic devices tend to require lower drive voltages than bulk modulators, since the small dimensions of the optical guides are such that the electric fields across the optical guides are very intense.

The advantage of externally modulating a laser as opposed to directly modulating the drive current of the laser is that the so called chirp effect -- a parasitic FM modulation created when modulating the laser current -- is avoided. Also, more significant for AM fiber optic transmission, the intensity noise of lasers which are run CW at constant power tends to be lower than that of lasers under broadband modulation.

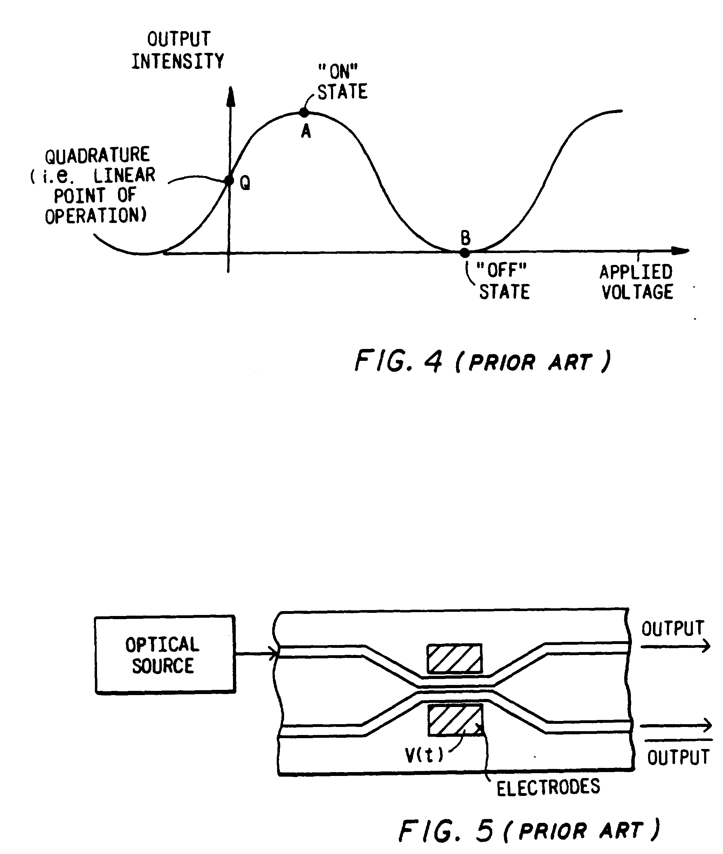

The main disadvantage of external modulation is the need for a second optical device-the additional modulator, with increased cost, complexity, and insertion loss through the modulator. A large fraction of this loss is inherent or intrinsic in the physics of a modulator, which dictate a voltage-light characteristic that is typically a raised cosine curve, as shown in Figure 4. The maximum points A of the curve correspond to maximum transmission (on-state) of the device, where ideally or intrinsically in the absence of excess losses (absorption of light in the guiding material) the transmission is 100%. The minimum points B represent the off-state of the device, where ideally all the light is blocked from reaching the output. For analog transmission, the device is biased at the 50% transmission point Q, the so called quadrature point. At the quadrature bias point Q, half the light is dissipated in the device, however, at this point the linearity is the best, i.e., over a limited range around Q, modulation signal voltage deviations from this state translate into proportional intensity deviations with only slight distortion, caused by the deviation of the sine curve from a straight line.

Analog AM transmission systems and distribution networks benefit from fiber-optic transport, since the distance between electrical repeaters is greatly increased. However, the requirements on RIN and on second-order linearity are very stringent for directly modulated lasers to be used in the optical transmitters. An alternative to using directly modulated lasers is using external modulators.

The advantage of using external modulators vs. directly modulated lasers in terms of the non-linear intermodulation distortion have been discussed by G. E. Bodeep and to. E. Darcie, "Comparison of Second and Third Order Distortion in Intensity Modulated InGaAsP Lasers and an LiNbO$_3$ External Modulator", Paper WK2, OFC89' Conference on Optical Fiber Communications, Houston, Texas, February 1989, where it was concluded that external modulators tend to have lower second order distortion but higher third order distortion than directly modulated lasers. However, the ability to keep down the second order distortion of an external modulator depends on how close to the quadrature point the device is biased. Various fabrication imperfections, temperature changes, optical damage, etc. cause the bias point to drift away from the quadrature point, in which case the second order distortion may become substantial.

A recent experimental demonstration of AM fiber transmission utilizing an external Mach-Zehnder modulator, and a high power low RIN 1.3 μm solid state Nd:YAG laser pumped by a high power GaAlAs/GaAs laser diode array, is described by G.E. Betts, L.M. Johnson, C.H. Cox III, S.E. Lowney, TuJ19, "High Sensitivity optical analog link using an external modulator", CLEO '89 April 24-28, Baltimore, Maryland.

In prior art external modulation techniques for fiber-optic AM transmission, half the optical power is dissipated in the external modulating device because of the need to bias the modulator in quadrature, halfway between its on and off states, in order to attain the maximum degree of linearity.

EP-A-0 403 991 teaches the ability to utilize substantially all the optical power, including the 50% which is wasted in prior art modulators. The power previously wasted in prior art modulators is utilized in accordance with the teachings of this invention to accomplish transmission to either a different receiver, as required in situations involving distribution of signals to multiple points as in cable television, for example, or to the same receiver, in which case a novel signal processing technique is used to recombine the two signals. When the previously wasted power is routed to the same receiver, an important benefit results: partial cancellation of RIN and even orders of distortion.

Also, EP-A-0 403 991 teaches structures which utilize modulators with pairs of complementary outputs, such that optical energy is not wasted but is rather transferred from one output to the other in accordance with the modulating signal. Unlike prior art integrated optic modulators having multiple output ports, such an optical modulator having multiple output ports is used to provide multiple output signals which are simultaneously routed to a plurality of optical receivers, or simultaneously routed to complementary input ports of a single optical receiver.

Complementary modulation means include those described by R. Alferness, "Titanium Diffused Lithium Niobate Waveguide Devices", in "Guided-Wave Optoelectronics", to. Tamir ed., Springer-Verlag, 1988, and include:

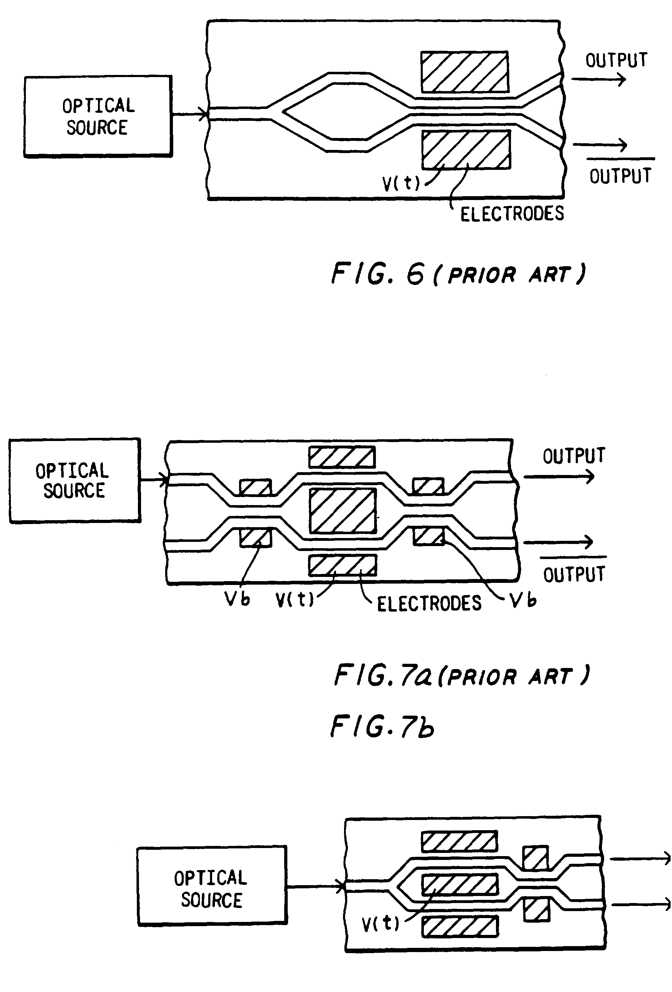

a directional coupler (Fig. 5), including electrodes for receiving signals for modulation,

a Y-fed directional coupler (Fig. 6), including electrodes for receiving a modulating signal; and

balanced-bridge interferometers (also known as 1 x 2 and 2 x 2 switches): devices which consist of either two directional couplers or a y-junction and a directional coupler, with a two-arm interferometer in between (Figs. 7a and 7b, respectively).

Additional complementary modulation means are described in EP-A-0 403 991.

<u>Linearity of electro-optic modulation means</u>

Both Mach-Zehnder type modulators and certain types of complementary output modulators such as the balanced bridge interferometer are described by a voltage-intensity transfer characteristic which is a raised cosine as shown in Fig. 4. In the case of directional coupler type devices, the complementary outputs are both described by raised cosines but the curves are shifted with respect to each other such that when one is at minimum the other is at maximum, and the sum of the two is constant, corresponding to constant output power from the two complementary outputs, the best operating bias point for linear operation is quadrature point Q which is located half way between the on and off states.

In general, the bias point is determined by the geometry of the device, e.g. the imbalance in length between the two arms in a Mach-Zehnder modulator, the length of the interaction regions in directional coupler type devices, as well as by static DC voltages applied to the electrodes of the device. Other factors such as optical damage in the presence of excess optical power, temperature variations, and the like may cause the bias point to drift.

Around quadrature point Q the transfer characteristic appears to be an odd function. At quadrature point Q, the second order harmonic distortion is nulled out, as are all even orders of distortion. Only odd orders of distortion remain present at quadrature bias point Q. The most important source of non-linearity remaining is the third order harmonic distortion, since the 5th, 7th, and subsequent higher odd orders of distortion are usually smaller than the third order.

Mathematically, the characteristic around the quadrature bias point appears to be of the form $\sin(\theta)$, which may be expanded into a power series as equation

$$\sin(\theta) = \theta - \frac{1}{6}\theta^3 + ... \tag{1}$$

where the modulation angle $\theta$ is proportional to the voltage $v(t)$ applied to the electrodes:

$$\theta = \frac{\pi}{V_\pi} v(t) \tag{2}$$

The absence of a second order term $\theta^2$ is apparent in this case, however if the device deviates from quadrature point Q by a small angle $\theta_b$ its characteristic is given by

$$\sin(\theta+\theta_b) = \sin(\theta)\cos(\theta_b) + \cos(\theta)\sin(\theta_b) =$$

$$\theta_b + \cos(\theta_b)\theta - \frac{\theta_b}{2}\theta^2 - \frac{1}{6}\cos(\theta_b)\theta^3 \tag{3}$$

The most obvious effect of non-quadrature biasing is the appearance of the second order harmonic distortion term:

$$\frac{1}{2}\theta_b\theta^2 = \frac{\pi^2\theta_b}{2V_\pi^2}v^2(t) \tag{4}$$

Another method to assess the presence or absence of second and third order distortion terms is by looking at the second and third order derivatives of the transfer characteristic

$$g(v) = g(0) + g'(0)v + \frac{1}{2}g''(0)v^2 + \frac{1}{6}g'''(0)v^3 \tag{5}$$

To suppress the second order term one needs to have $g''(0) = 0$. The characteristic $\sin(\theta+\theta_b)$ has a null second order derivative with respect to $\theta$ at the point $\theta_b = 0$.

<u>The problem</u>

The problem of analog transmission via fiber optics has received strong impetus with the introduction of some AM fiber links based on novel distributed feedback (DFB) semiconductor lasers. Analog AM transmission systems and distribution networks benefit from fiber-optic transport, since the distance between electrical repeaters can be significantly increased as compared with electronic distribution networks. However, the requirements on second-order and third-order linearity are very stringent for directly modulated lasers to be used in the optical transmitters, since the presence of non-linearities causes intermodulation distortion which, in the case of CATV transmission for example, shows up as intolerable degradation of the television picture. Because of non-linearity of the optical source, the modulating signal amplitude has tp be limited to small values in order to maintain the composite triple beat and second order distortion specifications under a tolerable level. A reduction of the optical source non-linearity would directly translate into the ability to increase the modulation signal amplitude while still maintaining the composite distortion specifications. An increased modulation amplitude (modulation index) is equivalent to better signal to noise ratio, i.e., the ability to distribute the analog signal over larger distances, to split the signal to more receiving sites, or to transmit more channels on the same link. The main obstacle with AM fiber transmission is how to overcome the non-linearity limitations of optical sources for analog transmission. Currently used approaches include:

1. Careful laser device selection, using distributed feedback lasers and other types of semiconductor low-noise lasers, and trying to carefully select individual devices or modify the fabrication process in order to produce a more linear response, for example preventing leakage current around the active lasing area. The problem with this approach is that currently the yield for devices with sufficient linearity is quite low, and reliable fabrication techniques for more linear laser devices have not yet been found.

2. Feedforward techniques, as described by J. Koscinski, "Feasibility of multichannel VSB/AM transmission on fiber optic links" NCTA Technical papers, Las Vegas 1987 p. 17. In these techniques, compensation of the nonlinearity is achieved by isolating the distortion produced in a nonlinear circuit and subsequently injecting the processed error back into the circuit. The disadvantages of these methods are in the requirements to use matched sources and the cost of two optical sources and the complexity of delay and gain balancing.

3. Negative feedback techniques, such as described by J. Koscinski, "Feasibility of multichannel VSB/AM transmission on fiber optic links," NCTA Technical papers, Las Vegas 1987 p. 17, rely on a photodiode to monitor the optical signal and provide the necessary feedback signal. The amount of distortion compensation depends on the feedback gain. Although the application of negative feedback is straightforward, large bandwidth requirements may create problems at high frequencies rendering this technique impractical.

An alternative to directly modulating lasers is using external modulators in conjunction with CW lasers. A directly modulated laser such as a DFB laser tends to be more sensitive to optical back reflection, and noisier than a CW laser which is modulated externally. The back reflection into the laser yields a non linear light vs. current response when coupled with chirping effects of the directly modulated laser. The advantages of using modulators vs. lasers in terms of the non-linear intermodulation distortion have been discussed by G.E. Bodeep, T.E. Darcie, "Comparison of second and third order distortion in intensity modulated InGaAsP lasers and an LiNbO$_3$ external modulator," Paper WK2, OFC89' Conference on Optical Fiber Communications, Houston, Texas, February 1989, where it was concluded that external modulators tend to have lower second order distortion but higher third order distortion then directly modulated lasers. However, the ability to maintain the second order distortion of a modulator at a sufficiently low level cannot be taken for granted, and depends on how close to the quadrature point the device is biased. Fabrication imperfections, temperature changes, optical damage, and the like may cause the bias point to drift away from quadrature, in which case the second order distortion becomes more substantial. In order to use external modulators effectively for analog transmission applications, the drift in the bias point (which causes second harmonic distortion) as well as the third order harmonic distortion of the device must be eliminated or greatly reduced, since prior art modulators provide adequate linearity only over a very limited range around the quadrature point.

It is generally known that external modulators have a transfer characteristic that is considerably more stable than that of lasers. Unlike the lasers' light vs. current curve, the shape of the modulators' transfer characteristic is generally unaffected by optical power, temperature, aging, and the like, although the quiescent point of operation on the fixed transfer characteristic is affected by these factors.

If means were found to extend the linear range around the quadrature point and to reliably maintain the quadrature point, then the modulation index of the analog information signal could be increased and the performance of analog links improved, with better signal to noise ratio, and the ability to provide longer links.

The document IOOC/83 TECHNICAL DIGEST, Tokyo, 27th - 30th June 1983, pages 378-379 by M. Bertelsmeier et al, discloses under the title "Linearization of light emitting and laser diodes for analog broadband applications by adaptive predistortion" an optical transmission or distribution system for broadband signals. The system comprises an optical transmitter including a light emitting diode or laser diode, an adaptive feedback system including means to superpose at least one pilot signal upon the electrical modulation signal, means for providing electronic preconditioning of said modulation signal prior to it driving said modulation means and after said pilot signals have been superposed. The system further comprises means for providing nonlinear predistortion, means to modify the shape of the nonlinear transfer characteristic of said means for providing electronic preconditioning or to tune the magnitude of at least one of the Taylor series coefficients of said transfer characteristic of said preconditioning means. Further, the system includes a monitoring optical receiver, means to route a portion of the transmitted optical power to said monitoring optical receiver, means to extract error signals indicative of the deviations of the overall system away from the optimum points of minimal harmonic distortion and intermodulation, i.e. the amounts of harmonic distortion or intermodulation are monitored, produced by interaction of said pilot signal with the overall nonlinearity of the optical transmitter. Means are provided to electronically process said error signals to feedback them to the electronic preconditioning means so as to bring the overall transfer characteristic of said means for preconditioning and modulation to bias values at which the harmonic distortion and intermodulation components in the spectrum of the modulated signal at the output of the transmitter are at a minimum or are substantially zero.

The document TELECOMMUNICATIONS AND RADIO ENGINEERING, vol. 44, no. 7, July 1989, pages 119-122, by I.V. KALMYKOV et al discloses under the title "A method of compensating the nonlinear distortions of light-emitting and laser diodes in broadband analog communications systems" a system for providing nonlinear distortion including a nonlinear electrical network that nominally has an odd-wave transfer characteristic wherein opposite polarity inputs generate opposite polarity outputs. The system comprises a parametric tuning input used to tune a third order Taylor coefficient of the transfer characteristic of the system to provide nonlinear predistortion.

The present invention is defined by patent claim 1.

BRIEF DESCRIPTION OF THE DRAWING

Figure 1 depicts a typical prior art system including a laser and an external modulator;
Figure 2 is an example of a prior art amplitude modulator utilizing a phase modulator located between cross polarizers;
Figure 3 is an example of a typical prior art Mach-Zehnder interferometer;
Figure 4 is a graph depicting a raised cosine transfer characteristic and the quadrature point of linear operation of an external modulator;
Figure 5 depicts a typical prior art directional coupler;
Figure 6 depicts Y-fed directional couplers;
Figures 7a and 7b depict balanced-bridge interferometers;

Figure 8 depicts one embodiment of an optical transmission or distribution system of prior art;

Figure 9 is one embodiment of a traveling wave balanced-bridge interferometer suitable for use in accordance with the teachings of this invention;

Figure 10 is one embodiment of a synchronous harmonic detector suitable for use as one or both detectors 907 and 908 of Fig. 8;

Figure 11 is a diagram of an embodiment of a transmission or distribution system constructed in accordance with the teachings of this invention;

Figure 12 is one embodiment of an odd-wave linearizer circuit suitable for use in accordance with the teachings of this invention;

Figures 13a, 13b, and 13c describe three embodiments of this invention utilizing predistortion networks;

Figure 14 is a model useful for analyzing the embodiment of Fig. 13c;

Figure 15 is a schematic diagram of one embodiment of a circuit suitable for use as the embodiment of Fig. 13b;

Figure 16 is an embodiment of the topology of Fig. 13c;

Figure 17 is a model of the circuit of Fig. 16 useful for analysis;

Figures 18a, 18b, and 18c are graphs depicting the odd-wave transfer characteristic of equation 69; and

Figure 19 is a diagram depicting one embodiment which utilizes a plurality of pilot tones.

## SUMMARY

The solutions provided by this invention for linearizing the response of electro-optic modulators are of great interest to the cable television industry in its attempt to expand its networks and reduce prices by cutting down on maintenance expenses and to bring high-definition television (HDTV) to customers. The solutions provided by this invention are also of great interest to the telephone industry in its attempt to bring broadband ISDN services over optical fiber to the homes of residential customers.

The invention discloses a general technique of taking advantage of the stability and repeatability of the modulator transfer characteristic in order to correct for second and third order distortion. These objectives are achieved in a way compatible with the nature of the video distribution frequency formats.

## DETAILED DESCRIPTION

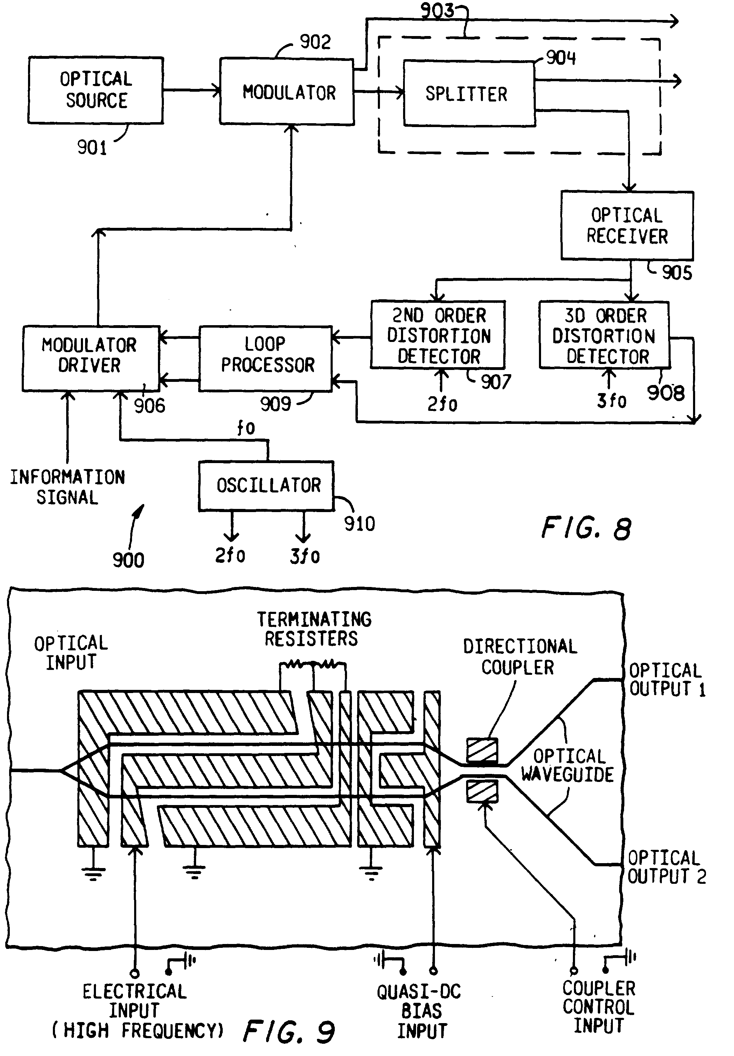

Figure 8 depicts one embodiment of an optical transmission or distribution system constructed in accordance with the teachings of prior art. Transmitter system 900 includes modulator means 902, a fiber optic distribution network 903 including one or more splitters 904, and at least one optical receiver 905.

The following discussion, by way of example, describes the technique when used for the distribution of multiple video channels for cable television. It is known that the composite video signal in a cable TV distribution system and in off the air TV broadcast systems is a highpass signal starting at 54 MHz, with the individual AM/VSB modulated video channels stacked in frequency at intervals of 6 MHz (except for some frequency gaps used for FM radio, mobile radio, etc.)

In accordance with the teachings of this invention, the low-pass vacant region (e.g. from 0 to 54 MHz in USA Cable Systems) of multichannel analog transmission (or other vacant spectral regions such as gaps between channel groups) is utilized for transmitting plural pilot tones generated by pilot tone oscillator 910, which are used to monitor the presence of second and third order distortion, via second order distortion detector 907 and third order distortion detector 908 respectively. Signals from detectors 907 and 908 resulting from the monitoring of the pilot tones at the receivers are fed back, via loop processor 909, to modulator driver 906 in order to hold modulator 902 at the quadrature bias operating point, to the effect of eliminating or reducing second order distortion, and to parametrically tune non-linear predistortion circuits within modulator driver 906 in order to eliminate or reduce its inherent second order distortion and eliminate or reduce third-order distortion and second order distortion of the overall system by generating opposing distortions in modulator 902 and in the compensating non-linearity within modulator driver 906.

Comparing the parametric feedback method of this invention with prior art negative feedback methods described by Koscinski, supra, it is apparent that the difference lies in the fact that in accordance with the present invention, slowly varying feedback is applied to the parameters of the predistortion network and modulator, which control the quiescent point, whereas in the prior art fast varying feedback is applied to the input signal itself. In the present invention, output diagnostic signals of intermediate frequency are monitored and used to actuate the feedback, whereas in the prior art the high frequency output signal is used to actuate the feedback. The advantages of utilizing lower frequency signals in the feedback loop are apparent.

While a predistortion network affecting the input signal itself may be an obvious first step to the challenge of extending the small-signal range of linear operation of a modulator, in the wake of device to device variations and device drifts this solution may not be viable. The adaptive parametric feedback solution taught in this invention, and tailored to the particular characteristics of electro-optic modulators, provides a consistent solution to the problem of improving non-linearity of electro-optic modulators for analog transmission as required for distribution of video signals via fiber optics and other emerging applications.

The combined effect of the anti-distortion measures of this invention is to reduce the overall non-linearity of the optical analog transmitter to the degree that cable television system specifications of composite second order and composite triple beat are met for higher modulation indexes, i.e., for higher signal to noise ratios.

In one embodiment, transmitter 900 includes a continuous wave laser, such as a DBF semiconductor laser or a solid state diode pumped laser, or an external cavity or a semiconductor Fabri-Perot laser serving as optical source 901. The output of optical source 901 is fed into modulator means 902, which may be, for example, an electro-optic Mach-Zehnder modulator, directional coupler, balanced bridge interferometer, or more generally any suitable modulating means. Modulating means 902 is electrically driven by modulation driver 906 which serves several functions:

1) Modulation driver 906 linearly amplifies the information signal and feeds the result to modulating means 902 conditioned at the proper level in amplitude and in impedance.

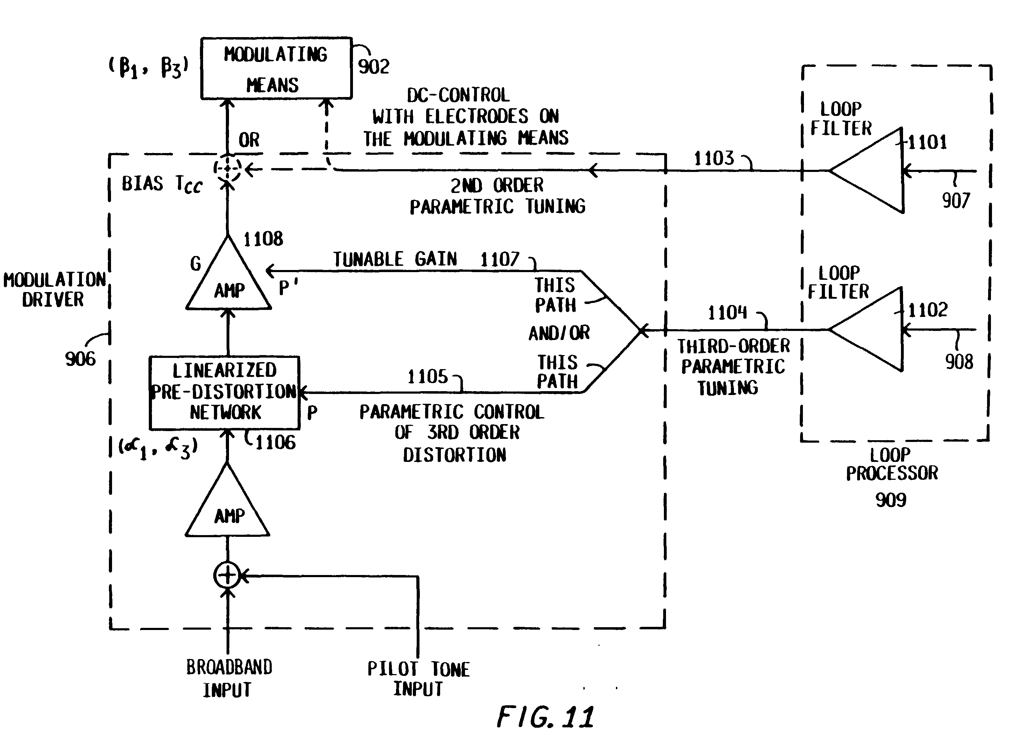

2) Modulation driver 906 provides a DC or slowly varying control voltage which establishes the modulator bias point. This slowly varying control voltage is used to steer modulating means 902 to the quadrature point where the second-order derivative of the transfer characteristic is nulled out. A typical embodiment, as shown in Fig. 11, comprises a bias-tee circuit combining the AC and quasi-DC components while keeping the two paths mutually isolated. The bias-tee circuit combines the quasi-DC control voltage with the broadband information voltage (i.e., the composite video signal in the case of CATV distribution).

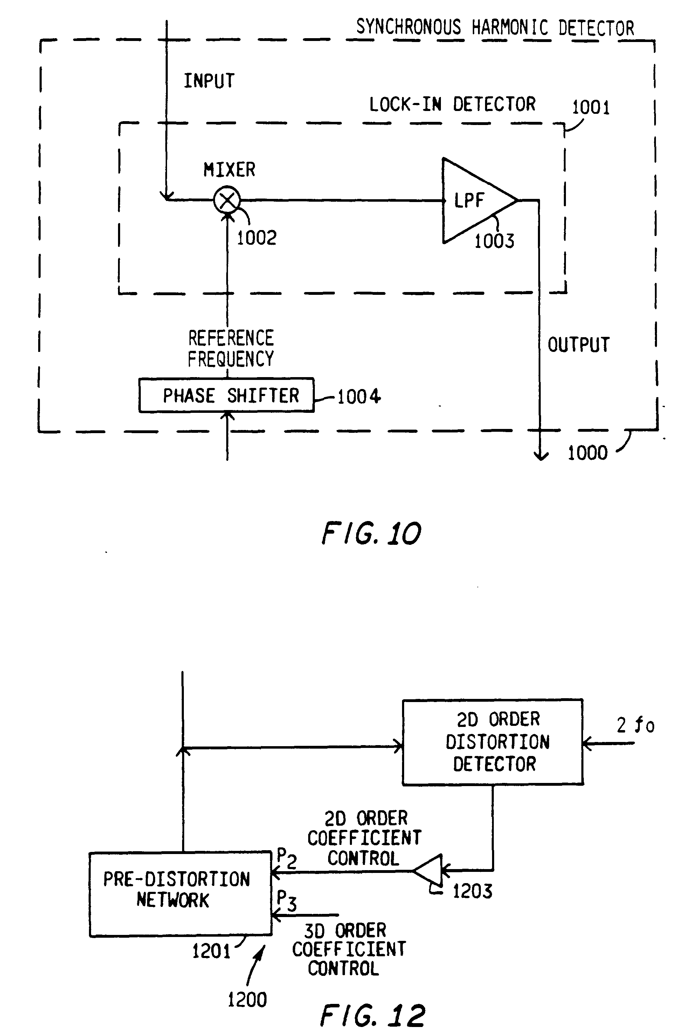

3) In another embodiment biasing electrodes are provided in the integrated optic modulator separate from the high frequency modulating electrodes. Unlike prior art where DC and high frequency signals are combined in one set of electrodes, the embodiment results in separating the high-speed circuitry from the biasing electronics. The high frequency electrodes do not have to carry any DC currents. In this case the modulation driver simply routes the quasi-DC signal to the biasing electrode. An embodiment for a travelling wave balanced bridge interferometer is shown in Fig. 9.

4) Modulation driver 906 provides a parametrically tunable non-linear predistortion to the useful information signal in order to compensate for the residual non-linearity of modulating means 902, after the modulating means is brought to the vicinity of the quadrature point. Parametrically tunable means that the quiescent operating points of the circuit (the parameters) can be tuned to affect the amounts of various orders of non-linearity.

5) Modulation driver 906 superposes two or more pilot signals from pilot tone oscillator 910 upon the electrical information signal, such that the spectrum of the pilot signals and the second and third harmonics of the pilot spectral components fall outside the passband of the useful information signal to be distributed. The second and third harmonics of the spectral components of the pilot signals are monitored at the output of optical receiver 905 by harmonic distortion detectors 907 and 908 and used to actuate the parameters of the modulation driver 906 in such a way that the overall second and third order distortion is nulled out. This parametric feedback is a form of negative feedback technique, however the feedback is not applied in real-time to the fast varying information signal but rather it is slowly applied to the parameters controlling the overall nonlinearity of the system, in order to null the overall nonlinearity out.

To this end, an optical splitter is placed upon at least one optical output of modulating means 902 to route a portion of the transmitted optical power to a monitoring optical receiver (which can be thought of as part of transmitter 900).

Optical splitter 904 can, for example, be realized either as a fiber optic directional coupler or be integrated on the same integrated optic substrate with the modulating means 902, or be realized as a bulk optic beam splitter.

Monitoring optical receiver 905 feeds its output signal into two synchronous harmonic detectors 907 and 908, which detect the presence in the optical output of modulating means 902 of second and third harmonic spectral components of the pilot tones, respectively, and the detectors detect the presence of intermodulation tones corresponding to the pilot tones.

One possible embodiment of a synchronous harmonic detector suitable for use as one or both detectors 907 and 908 is shown in Figure 10. Synchronous harmonic detector 1000 comprises lock-in detector 1001, formed by mixer 1002 followed by low-pass filter 1003. Mixer 1002 multiplies the signals received on its two inputs, i.e. the electronic signal from monitoring optical receiver 905 (Fig. 8) and a reference signal at a harmonic or intermodulation tone of the pilot tones. The reference signal is phased by phase-shifter 1004 such that it is in phase with the harmonic to be monitored. The use of phase-shifter 1004 is optional; at low frequencies the delay in the system may be small enough such that no substantial phase-shift occurs and all the signals are in phase. The harmonics of the pilot tone signal are thus detected using well known coherent or synchronous detection techniques, for example as described by R. Higgins, "Electronics with Digital and Analog Integrated Circuits," Hall, 1983, particularly Chapter 18, Section 3.

Referring again to Fig. 8, two such synchronous harmonic detectors 907 and 908 are provided to detect the second and third harmonic or intermodulation content, respectively, in the output from monitor optical receiver 905. Second order distortion detector 907 has its reference signal at twice the fundamental frequency of the respective pilot tone, whereas third order distortion detector 908 has its reference signal at three time the fundamental frequency of the respective pilot tone.

In the embodiment of Fig. 8, the output signals of distortion detectors 907 and 908 are fed into loop processor 909 which serves to electronically process the output signals from harmonic detectors 907 and 908 (either analog, digital or mixed analog-digital processing) in order to generate several analog actuating signals which are fed to modulation driver 906.

In the simplest form of loop network the two harmonic detector signals are processed separately, however one can envision more complex versions of analog processing, wherein the two harmonic detector signals are combined to generate at least two actuating signals. In the more general case the loop network is a two-port network with cross-coupling between the inputs and outputs, i.e. each of the outputs is a function of both inputs.

The actuating signals provided by loop processor 909 parametrically tune the quiescent point bias parameters of the modulation 906 driver, which in turn assures modulating means 902 continually operates at a bias point such that the overall distortion of the system is greatly reduced or eliminated as compared with prior art systems in which a bias point is chosen and remains fixed.

Considering only one of the pilot tones in Fig. 8, this pilot signal provided by pilot tone oscillator 910 can in general be any periodic signal which has null second and third harmonics such that the presence of the second and third harmonics in the optical output be uniquely associated with the degree of nonlinearity to be compensated, i.e., if one detects second or third harmonics in the output signal at the optical receiver, one knows that the harmonics are due to the combination driver-modulator, rather than originating in the pilot tone signal. Once one detects harmonics, corrections are applied to the driver to cause harmonics to disappear from the output signal of the optical receiver. It is also required that the frequency values of the (absent) second and third harmonics of the pilot tone fall within stopbands of the information signal spectrum. For example, in one embodiment of this invention suitable for use with cable television, the fundamental frequency of the pilot tones is less than 54 MHz/3, such that the second and third harmonics of the pilot tone fall in the low-pass stopband of 0 to 54 MHz, where there are no TV channels. Another requirement is that the second and third harmonics of the pilot tone must not fall on top of the intermodulation tones generated by the information signal itself in order not to contaminate the diagnostic signal with randomly phased spurious intermodulation tones associated with the information signal.

One example of a pilot signal suitable for use with this invention is a pure sinusoidal tone with its second and third harmonics kept at negligible level. Other pilot tone signals including digitally generated signals, can be used consistent with the requirement that the second and third harmonics of the signal be null.

Multiple pilot signals are used, allowing additional flexibility in the choice of monitoring frequencies and lifting the requirement that the second and third harmonics of the pilot tones be null. For example when two pilot tones of fundamental frequencies $f_1^p$ and $f_2^p$ (assume $f_1^p > f_2^p$) are injected with the modulation signal, the nonlinearity of the modulator driver and the modulator generates intermodulation tones at frequencies $f^{(2)} = f_1^p \pm f_2^p$. Either of these two values for $f^{(2)}$ may be used diagnostically to provide parametric feedback by detecting the presence of a tone at $f^{(2)}$ at the output of the monitoring receiver. The detection is done as before with a synchronous detector which is labeled "second-order distortion detector". The synchronous detector is also provided with a reference signal at the frequency $f^{(2)}$. This reference signal may be derived from the two oscillators generating the two pilot tones by mixing those two tones in a strong non-linearity such as a mixer, and narrow-band passing the desired frequency $f^{(2)}$. Similarly an error signal proportional to the strength of the third order residual nonlinearity of the transmitter may be derived by monitoring a third order intermodulation tone generated by the two pilot tones at frequency

$$f^{(3)} = 2 f_1^p \pm f_2^p$$

or

$$f^{(3)} = f_1^p \pm 2 f_2^p$$

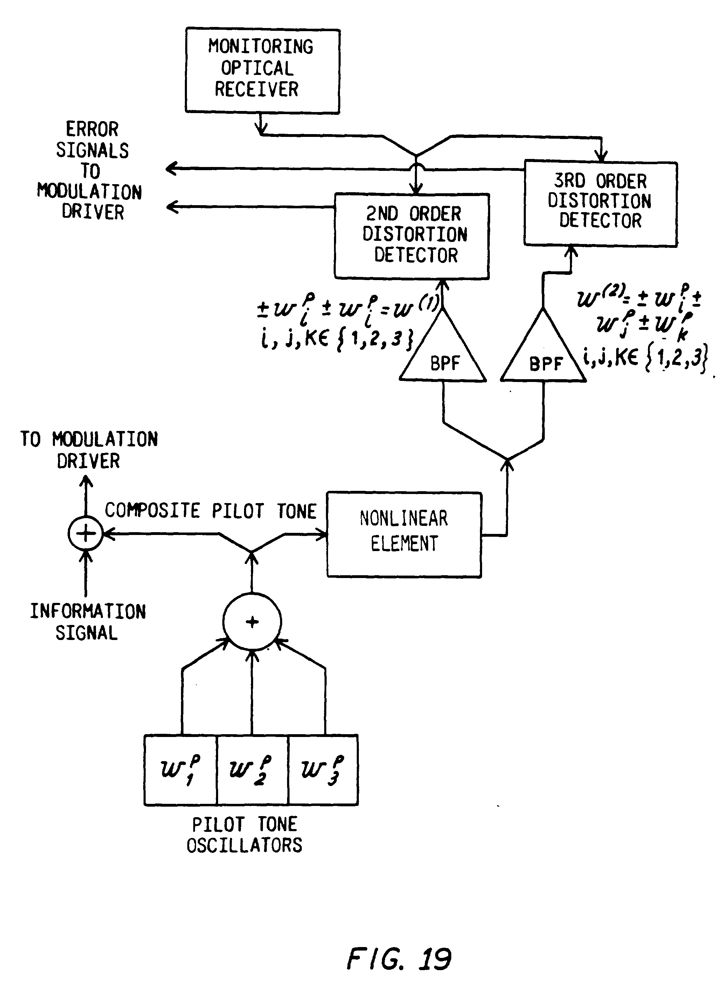

by means of a synchronous detector labelled the "third-order distortion detector" in Figure 19.

Fig. 19 shows an extension of the above concepts three pilot tones at frequencies $f_1^p$, $f_2^p$, $f_3^p$ injected into the modulation signal. The intermodulation frequencies are now

$$f^{(2)} = f_i^p \pm f_j^p \pm f_k^p ,$$

where the indexes i,j, and k are taken from the set {1,2,3} and where i,j, and k do not have to be distinct.

As before the two distortion detectors are provided with the reference frequencies $f^{(2)}$ and $f^{(3)}$, respectively, which

are derived by passing the summation of the three pilot tones through a strong non-linearity such as a diode or a mixer with its two input ports shorted and connected to the input signal.

The other output of the optical splitter (the one which does not lead to the monitoring receiver) as well as any other available outputs of the modulation means, are connected to a fiber optic or free space transmission or distribution network terminating in one or more optical receivers. It is assumed that these receivers as well as the monitoring optical receiver within the transmitter contribute an amount of harmonic distortion and intermodulation which is substantially lower than that resulting from the transmitter nonlinearity.

Preferred embodiment

In a preferred embodiment (Fig. 11), the loop processor 909 consists of two uncoupled low-pass filters 1101 and 1102, each connected to the second and third distortion detectors 907, 908, (Fig. 8), respectively. In an alternative embodiment, either one of filters 1101 and 1102 may be absent or included within its associated harmonic detectors 907 and/or 908.

The output signal of second order distortion monitoring filter 1101 drives the input 1103 to modulation driver 906 which is used to add a DC bias to the modulation signal applied to modulating means 902 or to directly control separate biasing electrodes on modulator means 902, in effect (ideally) nulling the amount of second order distortion present in the modulated output signal of modulating means 902 by shifting the bias point around the quadrature point.

The output signal 1104 of third order distortion monitoring detector 1102 drives a parametric input 1105 of linearizer predistortion circuit 1106, or alternatively drives gain control input 1107 of linear gain element 1108 placed after the linearizer circuit and before the modulating means 902. The parametric feedback loop actuates input 1104 to (ideally) null out the third order combined nonlinearity of the modulating driver 906 and the modulating means 902.

Odd-wave mode of operation

The system of Fig. 11 is easiest to understand and the overall system operates best when linearizer non-linear network 1106 has an odd-wave amplitude transfer characteristic. That is, the output $y(t)$ amplitude vs. input amplitude $x(t)$ of the linearizer is described by an odd (antisymmetric) function with respect to the zero-voltage point: $y(-x) = -y(x)$. A Taylor series expansion up to the third order does not then contain a second order term:

$$y(t) = \alpha_1(p)x(t) + \alpha_3(p)x^3(t) \qquad (6)$$

Notice that the amount of third order nonlinearity of this circuit is parametrically controlled by a parametric electrical input (voltage or current) p, where in general the parameters $\alpha_1$ and $\alpha_3$ have different dependences on the control signal p. In order to obtain compensation of the modulator third-order nonlinearity, the sign of the third order coefficient $\alpha_3$ should be opposite that of the third order coefficient of the modulator and a certain relationship should exist between the various coefficients, such that for a particular value of the control parameter p, the third order nonlinearity of the odd-wave linearizer precisely compensates for the third-order nonlinearity of the modulator. The amount of third order nonlinearity of the odd-wave linearizer is tuned by the control circuit to precisely compensate for the third order non-linearity of the modulator, nulling the overall third-order nonlinearity of the linearizer-modulator combination. The compensation process can be described mathematically as follows:

Assume that the modulator has been separately tuned to its quadrature point so it is also described by a Taylor series with only first and third terms (with the other terms vanishingly small):

$$z(t) = \beta_1 y(t) + \beta_3 y^3(t) \qquad (7)$$

Substituting eq. 6 in eq. 7 and performing the expansion, collecting like powers, and retaining only terms of order up to the 3rd, yields:

$$z = \beta_1\alpha_1 x + (\beta_1\alpha_3 + \beta_3\alpha_1^3)x^3 \qquad (8)$$

The terms in x of higher order than the third have coefficients which contain products of powers of $\beta_3$ and $\alpha_3$ (each of which terms are assumed small) and are therefore negligibly small. However the coefficient of $x^3$ in z is just small, not negligibly small (since $\beta_1$ and $\alpha_1$ are not small). It is apparent that in order to render this coefficient null requires:

$$\beta_1\alpha_3 + \beta_3\alpha_1^3 = 0 \qquad (9)$$

or

$$\frac{\beta_1}{\beta_3} = -\frac{\alpha_1^3(p)}{\alpha_3(p)} \qquad (10)$$

Thus the sign of $\alpha_3$ being opposite that of $\beta_3$ is a necessary condition for nulling out third order distortion. For example, the modulator characteristic around its quadrature point is described by $y = \sin(x) = x - (1/6)x^3 + ...$ Thus, $\beta_1 =$

1 and $\beta_3 = -(1/6)$, therefore $\alpha_3$ and $\alpha_1$ should have the same sign, i.e., positive and $\alpha_3 = \alpha_1^3/6$. Furthermore, for a suitable dependence of $\alpha_1$ and $\alpha_3$ on p, one can find a solution to equation (10). The detailed parametric dependence, as determined by the nature of the nonlinear network, determines the range over which a solution can be found, if at all.

An additional degree of freedom can be provided by incorporating a linear gain element between the linearizer and the modulator of Fig. 11. In this case the describing transfer characteristics are:

$$y'(t) = \alpha_1(p)x(t) + \alpha_3(p)x^3(t) \tag{11}$$

$$y(t) = Gy'(t) \tag{12}$$

$$z(t) = \beta_1 y(t) + \beta_3 y^3(t) \tag{13}$$

It is easy to see by substitution that the nonlinear system $\beta_1$, $\beta_3$ preceded by the linear gain G, is equivalent to a nonlinear system $(G\beta_1, G^3\beta_3)$. Similarly, the nonlinear system $\alpha_1$, $\alpha_3$ followed by the linear gain G is equivalent to a nonlinear system $(G\alpha_1, G\alpha_3)$.

Arguing either way, once the gain G is inserted, the condition (eq. 10) becomes:

$$\frac{G\beta_1}{G^3\beta_3} = -\frac{\alpha_1^3(p)}{\alpha_3(p)} \tag{14}$$

$$\frac{\beta_1}{\beta_3} = \frac{G^3\alpha_1^3(p)}{G\alpha_3(p)} \tag{15}$$

Thus, the gain G may be tuned to a value which may facilitate meeting the nulling condition. More generally, another parameter p′ may be used to tune this gain in addition to or in lieu of p, yielding the following null third harmonic condition

$$\frac{\beta_1}{\beta_3} = -\frac{G^2(p')\alpha_1(p)}{\alpha_3(p)} \tag{16}$$

## Modulator Quadrature Operation

In the discussion above it was assumed that the modulator is described by a nonlinear transfer characteristic which is odd i.e. it has no second order coefficient. This is separately achieved by the control loop which monitors the generation of second harmonic distortion and superposes a slowly varying (quasi-DC) correction term onto the modulating input signal applied to the modulator. The slowly varying actuating voltage tunes the bias point of the modulator to the point of null second harmonic distortion.

Let the modulator voltage v(t) include a pilot term $v_p\cos\omega_p t$. The result of the second order non-linearity term $\theta_b v^2(t)$ (eqs. 2,3,4) is to generate a term $\theta_b v_p^2\cos 2w_p t$, which is down converted by multiplication with the reference frequency $v_r\cos(2w_p t + \phi_r)$, to yield a signal $\theta_b v_p^2 v_r\cos\phi_r$. By setting the phase of the reference signal to $\phi_r = 0$, one obtains a second harmonic correction signal $\theta_b v_p^2 v_r$. Notice that this correction signal is proportional to the deviation $\theta_b$ away from the wanted quadrature point and has different signs depending whether the modulator drifts on one side or the other of the null point, thus it is a good error signal for actuating feedback to null $\theta_b$, which results in elimination of the second harmonic component in the optical output. Thus, by electronically feeding back the deviation from the null point of second harmonic distortion, to affect the modulation bias point tuning, the modulator is kept locked to its quadrature point, resulting in minimization of the second order harmonic and intermodulation distortion.

Once the second harmonic correction feedback loop brings the second order distortion of the transmitter to a minimum, the next source of harmonic distortion is the third order term. To reduce this term, the non-linear predistortion circuit described in Fig. 11 provides a non-linear circuit 1106 which, combined with the nonlinearity of the modulator, provides a reduced (or ideally, a null) overall third order harmonic coefficient, as explained above. The transfer characteristic of the non-linear predistortion means is designed to be as close as possible to the inverse of the non-linear characteristic of the modulating means, resulting in a partial cancellation of third order non-linearity. However, in the wake of device to device variations (both the modulator and the linearizer), temperature variations, differences in the drive voltage of the modulator, a particular fixed design of the pre-distorting nonlinearity may not work optimally and repeatably in all cases. For this reason, in the present invention the predistortion circuit is realized with a degree of freedom, namely a parametric input which controls the relative values of the fundamental to the third harmonic output, (eq. 10) or a variable gain parameter (eq. 16).

The tuning of this parametric scale factor over a limited range brings the combined driver-modulator system to a null point of third order Taylor coefficient of the transfer characteristic, cancelling in effect third order intermodulation distortion.

Odd-wave linearizer realization

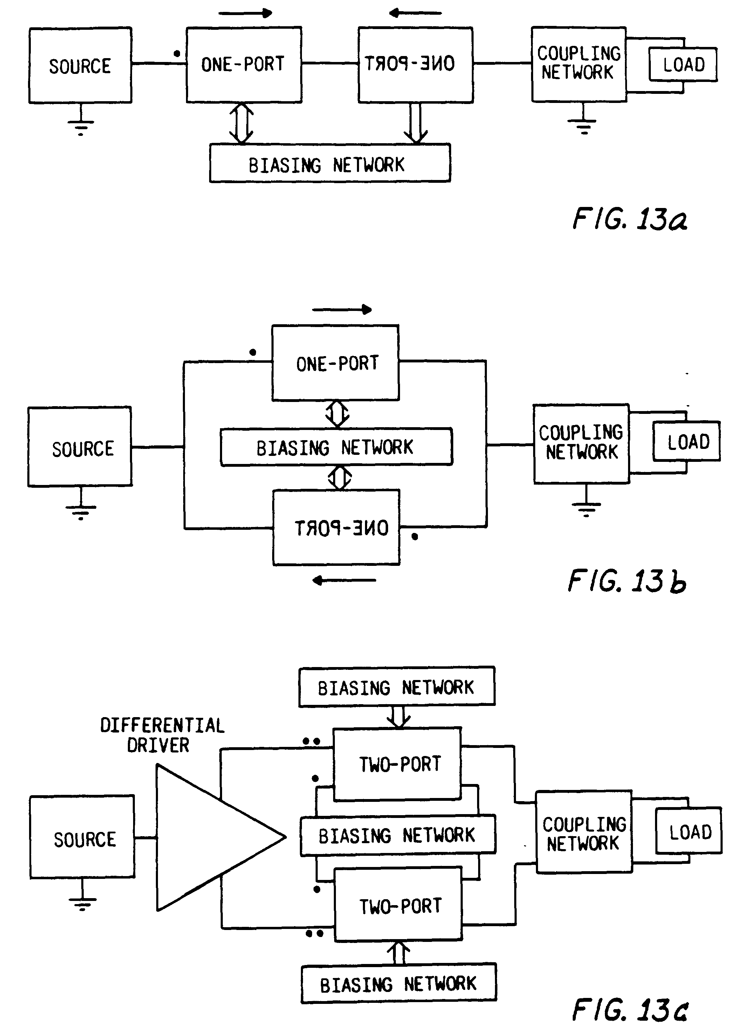

An odd-wave linearizer nonlinear circuit can be designed based on a number of circuits which include nonlinear components such as diodes. Using antisymmetrical topologies, these circuits are designed to yield an ideally antisymmetric voltage or current transfer characteristic, however because of imperfections in element matching, residual even components may be present. A circuit with two degrees of freedom should be designed which has its second and third order nonlinearity separately voltage or current controlled by two separate inputs. Such circuit should be embedded in a system which acts to null out the second harmonic characteristics. A particular implementation of such a system is described below with reference to Fig. 12. The transfer characteristic of the predistortion network is given by

$$y = \alpha_1 x + \alpha_2(p_2)x^2 + \alpha_3(p_3)x^3, \qquad (17)$$

where

$x =$ the input voltage;

$y =$ the output voltage;

$p_2 =$ the control parameter of the second harmonic coefficient; and

$p_3 =$ the control parameter of the third harmonic coefficient.

Assuming that there is a value of the parameter $p_2$ such that $\alpha_2(p_2)$ is zero, then it is possible to design an electronic control loop similar to the opto-electronic control loop shown in Fig. 11, sensing the output of the modulator, in order to null out the $\alpha_2(p_2)$ coefficient. The electrical output signal of network 1201 is tapped off and a sample of the network output signal is passed to second order distortion detector 1202 which feeds back through loop filter 1203 to provide voltage $p_2$ which controls the second order distortion of linearizing circuit 1201.

The combined operation of all the control loops described above is that the last described control system makes sure that the linearizer is described by a characteristic which is entirely odd. The second harmonic monitor on the optical output brings the modulator to a null point of its second harmonic and the third harmonic monitor on the optical output brings the linearizer to an operating point where it has no second harmonic and its third order nonlinearity cancels that of the modulator. This results ideally in null overall second and third order distortion.

Limited frequency response considerations

The linearizer and modulator were described in eqs. 6,7 as having a memoriless instantaneous amplitude transfer characteristic. In reality, these devices have finite bandwidths and associated frequency responses. An important point is that the phase characteristic of the frequency response should be linear in frequency to a good approximation and the magnitude roll-off of the linearizer-modulator combination should be minimized. These requirements essentially mean that special care should be taken in using high frequency components in the linearizer non-linear predistortion circuit and using a broadband modulator. The more the phase frequency deviates from linearity and the amplitude rolls-off, the less perfect is the cancellation of third harmonic distortion in the combination of linearizer and modulator. This degradation may be counteracted by introducing linear frequency compensation circuits between the linearizer and the modulator, such that the overall frequency response is flat in magnitude and has constant group delay (linear phase) to a good approximation.

The linearizer predistortion network may be modeled as a memoriless instantaneous non-linearity of amplitude transfer characteristic described by

$$y'(t) = \alpha_1 x(t) + \alpha_3 x^3(t) \qquad (18)$$

followed by a linear finite memory system of transfer function $H(w)$, and impulse response $h(t)$:

$$y(t) = h(t) * y'(t) \qquad (19)$$

where $*$ denotes convolution.

The linearizer feeds into the modulator which is described by a memoriless transfer characteristic

$$z(t) = \beta_1 y(t) + \beta_3 y^3(t) \qquad (20)$$

(in fact, the linear frequency response of the modulator and of the modulator driver are absorbed in the transfer function $H(w)$ assigned to the linearizer).

Let the input contain the complex sinusoids $e^{\pm jw_k t}$, $e^{\pm jw_m t}$, $e^{\pm jw_n t}$, and then the output $y'(t)$ of the first non-linearity (eq. 18) contains the term $\alpha_3 e^{j[\pm w_k \pm jw_m \pm w_n]}$

as well as the original terms

$$\alpha_1 e^{\pm jw_k t},$$

$$\alpha_1 e^{\pm jw_m t},$$

$$\alpha_1 e^{\pm jw_n t}.$$

The frequencies k,m,n may or may not be distinct. At the output of the linear filter the various complex exponentials get multiplied by the complex transfer function H(w), i.e., get modified in amplitude and attenuated in phase: The intermodulation term evolves out of the linear filter as

$$\alpha_3 H(\pm w_k \pm w_m \pm w_n)e^{j[\pm w_k \pm w_m \pm w_n]}$$

while the direct modulation terms come out as

$$\alpha_1 H(\pm w_k)e^{\pm jw_k t},$$

$$\alpha_1 H(\pm w_m)e^{\pm jw_m t},$$

$$\alpha1 H(\pm w_n)e^{\pm jw_n t}.$$

Finally, both the intermodulation and direct modulation terms hit the non-linearity of the modulator. The intermodulation term transparently passes through the linear part of the modulator non-linearity yielding a component:

$$\beta_1 \alpha_3 H(\pm w_k \pm w_m \pm w_n)e^{j[\pm w_k \pm w_m \pm w_n]} \tag{21}$$

The direct modulation terms interact with the non-linearity of the modulator to generate intermodulation terms:

$$\alpha_1^3 \beta_3 H(\pm w_k)H(\pm w_m)H(\pm w_n)e^{j[\pm w_k \pm w_m \pm w_n]} \tag{22}$$

The total intermodulation term at the output of the modulator is the superposition of the two intermodulation terms generated in the linearizer and modulator respectively:

$$[\beta_1 \alpha_3 H(\pm w_k \pm w_m \pm w_n) +$$

$$\alpha_1^3 (\beta_3 H(\pm w_k)H(\pm w_m)H(\pm w_n)]e^{j[\pm w_k \pm w_m \pm w_n]} \tag{23}$$

In order for this term to cancel, the term in brackets needs to vanish:

$$\beta_1 \alpha_3 H(\pm w_k \pm w_m \pm w_n) + \alpha_1^3 \beta_3 H(\pm w_k)H(\pm w_m)H(\pm w_n) = 0 \tag{24}$$

This nulling condition is a generalization of the static (low frequency) memoriless analysis (eq. 9) whereby the condition for cancellation of third-harmonic was found to be:

$$\beta_1 \alpha_3 + \alpha_1^3 \beta_3 = 0 \tag{25}$$

Breaking $H(w) = A(w)e^{j\phi(w)}$ into its amplitude and phase, the total complex amplitude of the total intermodulation distortion term is written as:

$$\beta_1 \alpha_3 A(\pm w_k \pm w_m \pm w_n)e^{j\phi[\pm w_k \pm w_m \pm w_n]} +$$

$$\alpha_1^3 \beta_3 A(\pm w_k)A(\pm w_m)A(\pm w_n)e^{j[\phi[\pm w_k] \pm \phi[w_m] \pm \phi[w_n]]} = 0 \tag{26}$$

A sufficient condition for the vanishing of this expression is that $\phi[w]$ be linear in w

$$\phi(w) = T_g w \tag{27}$$

over the range $w_k + w_m + w_n$, yielding

$$\phi[\pm w_k \pm w_m \pm w_n] = \phi[\pm w_k] + \phi[\pm w_m] + \phi[\pm w_n] \tag{28}$$

and allowing the simplification of the equation to

$$\beta_1 \alpha_3 A(\pm w_k \pm w_m \pm w_n) = - \alpha_1^3 \beta_3 A(\pm w_k)A(\pm w_m)A(\pm w_n) \tag{29}$$

If the amplitude response is essentially constant over the range $w_k + w_m + w_n$, $A(w) = G$, the condition for the intermodulation distortion nulling is

$$\beta_1 \alpha_3 + \alpha_1^3 \beta_3 G^2 = 0 \tag{30}$$

which is identical to the condition found for the memoriless case in eq. 16.

Thus, the condition for broadband cancellation of non-linearity is the constancy of the amplitude frequency response over frequency as well as constancy of the group delay which is defined as the derivative of the phase response with respect to frequency:

$$T_g(w) = d\Phi/dw$$

It is apparent that the condition of eq. 27 means that $T_g$ is constant over frequency. To achieve this condition, one needs to use a modulator and linearizing circuit which have broad frequency responses, ideally much broader than the bandwidth of the information signal, such that the roll-off of the amplitude and group delay over frequency is negligible over the bandwidth of the information signal.

The pre-distortion circuit is preferably realized by using an integrated electronics high frequency fabrication process which allows a high value of the frequency cut-off of the circuit elements. In practice the frequency response requirements are difficult to meet for state-of-the-art travelling wave modulators which exhibit a fairly constant group delay but may roll off in magnitude of the order of 1 dB over 1 GHz when designed for low drive voltage.

What is further taught by this invention is the use of linear frequency compensation or equalization by inserting a linear filter between the modulator and the linearizer such that its frequency response when combined with the other frequency responses present in the system (that of the modulator and of the pre-distortion network) yields a net frequency response that is flatter in amplitude and group delay over frequency than the original system was in the absence of this compensating filter.

While the concept of frequency equalization is well known in electronics, the particular context in which the application of such linear equalization network is taught is that of the novel analysis of eqs. 24-30 which highlights the significance of the linear frequency response when dealing with the cancellation of non-linearities arising in optical transmission.

The equalization should typically be realized by a high-pass or a band-pass filter which in the case of travelling wave $LiNbO_3$ modulators should provide an increase in amplitude in frequency while substantially providing linear phase (constant group delay) over the bandwidth of the information signal since the modulator response typically has constant group delay to start with as does the response of a linearizer pre-distortion network realized as an IC with a frequency cut-off substantially higher than the information bandwidth.

In terms of the structure of the modulator driver, the linear frequency equalization may be combined with tunable gain element 1108 (Fig. 11).

### More generalized operation of linearizer with residual even-wave component

If the linearizer is not precisely odd-wave, there is an even second order residual coefficient $\alpha_2$. If no measures are taken to null out this coefficient, it turns out that the system as described above may still work over a range of parameters. In this case, the second-order harmonic monitoring loop is feeding back to the modulator but it now no longer brings the modulator to the quadrature point. It rather acts to null out the second order characteristics of the whole system -- modulator plus linearizer by bringing the modulator to an operating point slightly off quadrature such that the residual second order distortion of the modulator cancels that of the linearizer circuit.

The presence of an additional second order coefficient term in the two Taylor series describing the modulator and the linearizer further causes the generation of an additional contribution to the third order distortion (caused by the mixing of the terms $\alpha_1 x$ and $\alpha_3 x$ through the second order term $\beta_2 y^2$ of the modulator). Working out the math,

$$y = \alpha_1 x + \alpha_2 x^2 + \alpha_3 x^3 \tag{31}$$

$$z = \beta_1 y + \beta_2 y^2 + \beta_3 y^3 \tag{32}$$

Thus,

$$z = \beta_1 \alpha_1 x + (\beta_1 \alpha_2 + \beta_2 \alpha_1^2)x^2 +$$
$$(\beta_1 \alpha_3 + \beta_3 \alpha_1^3 + 2\alpha_1 \alpha_2 \beta_2)x^3$$
$$+ \text{ higher order terms} \tag{33}$$

The nulling condition for the second order term $x^2$ is

$$\beta_1 \alpha_2 + \beta_2 \alpha_1^2 = 0 \tag{34}$$

and the nulling condition for the third order term is

$$\beta_1 \alpha_3 + \beta_3 \alpha_1^3 + 2\alpha_1 \alpha_2 \beta_2 = 0. \tag{35}$$

The second order term nulling condition may be written

$$\frac{\beta_1(q)}{\beta_2(q)} = -\frac{\alpha_1^2(p_2)}{\alpha_2(p_2)} \tag{36}$$

where q is the biasing control parameter of the modulator around its quadrature point.

By tuning the second order coefficients via the parameters q and $p_2$, one can null the second order contribution.

In fact, the tuning may be done mainly or exclusively by means of the parameter q which controls the quadrature point of the modulator, i.e. q mainly affects $\beta_2$ and to a very small extent (for small deviations around quadrature) the linear gain $\beta_1$. Alternatively, this tuning may be performed or facilitated by means of a linear gain G which is inserted between the linearizer and the modulator. It is easy to see that a system ($\alpha_1$, $\alpha_2$, $\alpha_3$) followed by a gain G is equivalent to a system ($G\alpha_1$, $G\alpha_2$, $G\alpha_3$). Similarly a system $\beta_1$, $\beta_2$, $\beta_3$ preceded by a gain G is equivalent to a system ($G\beta_1$, $G^2\beta_2$, $G^3\beta_3$). The second order term nulling condition then becomes

$$\frac{\beta_1}{\beta_2} = \frac{G^2(p'_2)\alpha_1^2(p_2)}{G(p'_2)\alpha_2(p_2)} \tag{37}$$

If the third term in eq. 37 is negligible, in case the combined product of the second order nonlinearities $\alpha_2\beta_2$ is negligible, the third order nulling condition becomes identical to the one discussed before in the odd-wave case (eq. 37 reduces to eq. 9) In general, soluble operating ranges can be more readily attained for the third order nulling condition by tuning the gain G to an appropriate value, which changes the nulling condition to

$$\beta_1\alpha_3 G + \beta_3\alpha_1^3 G^3 + 2\alpha_1\alpha_2\beta_2 G^2 = 0 \tag{38}$$

or

$$\beta_3\alpha_1^3 G^2 + 2\alpha_1\alpha_2\beta_2 G + \beta_1\alpha_3 = 0, \tag{39}$$

given the condition

$$\alpha_1^2\alpha_2^2\beta_2^2 - \beta_3\alpha_1^3 \beta_1\alpha_3 > 0 \tag{40}$$

a solution G exists for eq. (39).

It is apparent that in the presence of the second order terms in the linearizer, the two loops still operate quite independently to null out the second and third harmonics of the whole systems although contributions of the second order terms affect the balancing of third order terms.

Circuit realizations of predistortion networks

The linearizer system included in the modulation driver is based on non-linear circuits or networks that should be tunable around the quiescent point where the second order Taylor series coefficients null out. These non-linear circuits should also have tunable third order coefficients (to be tuned by parametric feedback to such values as to cancel out the third-order coefficient of the modulator). Such tunabilities are the basis for the parametric feedback techniques outlined in this invention, in the wake of device to device variations and device drifts over time, temperature, optical power and the like.

This section addresses some general principles for realizing such predistortion circuits and presents some specific embodiments.

In general, one designs a predistortion network nominally odd-wave, i.e., the predistortion network should ideally have an odd-wave characteristic (the output should be an anti-symmetric (odd) function of the input). Such a network may be realized using (anti)-symmetric circuit topologies in which two essentially identical sub-networks which are mirror images of each other are combined in certain ways in order to generate the odd-wave characteristic by superposition. Three separate embodiments are described as shown in Figs. 13a, 13b, and 13c.

a. In the first embodiment (Fig. 13a) two nominally identical one-ports are connected in series, inverted with respect to each other between the source and the load (the load may be preceded by a coupling network).

b. In the second embodiment (Fig. 13b) two nominally identical one-ports are connected parallel, inverted with respect to each other between source and the load.

c. In the third embodiment (Fig. 13c) two nominally identical two-ports are connected in a symmetric arrangement such that congruent inputs are connected to the two complementary outputs of a differential driver (which provides opposing polarities on its two outputs) and the output is also taken differentially between congruent output ports.

In each case, the two "half-networks" are assumed nominally (i.e., ideally) matched but due to device variations and drifts slight differences may result in their characteristics. In the wake of mismatch between the half-networks, one can still recover an overall odd-wave characteristic for the whole system by slightly detuning of the biasing networks away from the nominally identical quiescent points.

Inverted one-ports in parallel

The following mathematical description applies for example to embodiment (Fig. 13b) which is taken by way of illustration. The other two embodiments may be similarly analyzed.

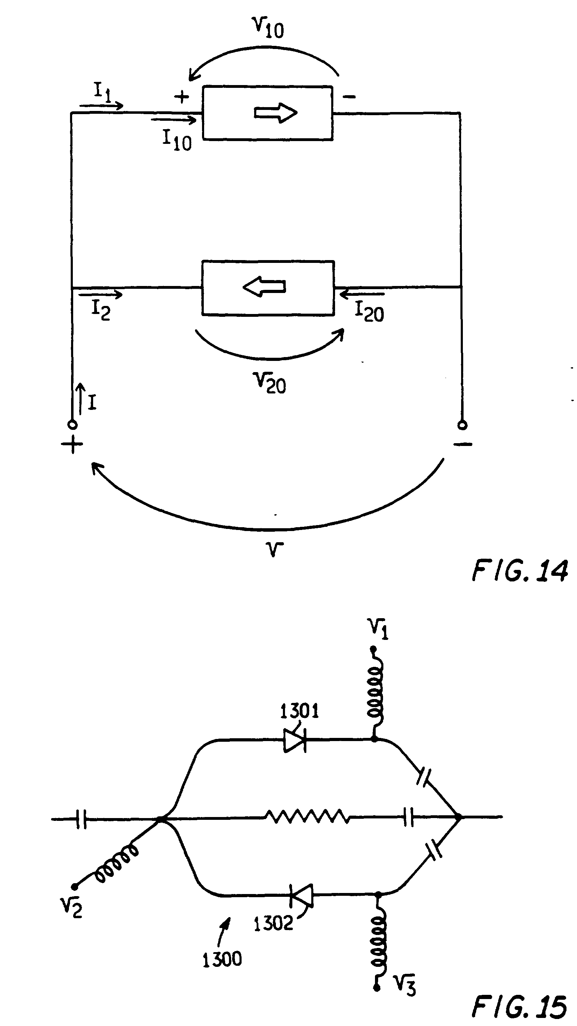

The total current through the parallel combination of one-ports (Fig. 14) is

$$I = I_1 + I_2 \tag{41}$$

and the voltage on each of the two parallel one-ports is

$$V = V_{10} - V_{20} \tag{42}$$

where $V_{10}$ and $V_{20}$ are the one-port voltages referred to a reference frame rigidly connected to the one-ports. Similarly, the currents in the reference frames of the one-ports are given by $I_{10}$ and $I_{20}$ such that

$$I_1 = I_{10} \tag{43}$$

and

$$I_2 = -I_{20} \tag{44}$$

because of the inverted topology.

The total current is then given by

$$I = I_{10}(V) - I_{20}(-V) \tag{45}$$

If the devices are matched, i.e., if they have identical characteristics,

$$I_{10}(\bullet) = I_{20}(\bullet) \equiv I_0(\bullet) \tag{46}$$

eq. 45 becomes:

$$I(V) = I_0(V) - I_0(-V) \tag{47}$$

Notice that this is an odd-wave characteristic

$$I(-V) = I_0(-V) - I_0(V) = -I(V) \tag{48}$$

In terms of Taylor series, let the two devices be described by

$$I_{10}(V) = \alpha_1 V + \alpha_2 V^2 + \alpha_3 V^3 \tag{49}$$

and

$$I_{10}(V) = \alpha'_1 V + \alpha'_2 V^2 + \alpha'_3 V^3 \tag{50}$$

Then

$$I(V) = I_{10}(V) - I_{20}(-V) = (\alpha_1 + \alpha'_1)V$$
$$+ (\alpha_2 - \alpha'_2)V^2 + (\alpha_3 + \alpha'_3)V^3 \tag{51}$$

If the $\alpha$ coefficients are equal to the $\alpha'$ coefficients then it is apparent that the second order coefficient of $I(V)$ vanishes. However, even if the two one-ports are not precisely matched, it is still possible to vary control biasing parameters $p_2$ and $p'_2$, such that the following odd-wave condition is satisfied

$$g_2 = \alpha_2(p_2) - \alpha'_2(p'_2) = 0 \tag{52}$$

leading to vanishing second order coefficient. (odd-wave condition). Another way of nulling out the small residual second order coefficient is by shifting the bias point of the applied voltage V as follows: Let us compactly rewrite eq. 51 as

$$I(V) = g_1 V + g_2 V^2 + g_3 V^3 \tag{53}$$

where $g_2$ is given by eq. 52

Now, substituting $V - \Delta$ for V and expanding yields

$$I(V - \Delta) = g_3 V^3 + [g_2 - 3g_3\Delta]V^2 +$$
$$[g_1 + 3g_3\Delta^2 - 2g_2\Delta]V + [g_1\Delta + g_2\Delta^2 + g_3\Delta^3] \tag{54}$$

It is apparent that the coefficient $[g_2 - 3g_3\Delta]$ of $V^2$ may be nulled out by a choice of bias deviation

$$\Delta = \frac{g_2}{3g_3} \tag{55}$$

leading to an odd-wave characteristic.

If the output is not connected across a virtual ground point (i.e., if it does not see zero-output impedance) and if the source has a finite impedance then the applied voltage is not equal to the voltage across the parallel connection of one-ports and the analysis gets slightly more complicated as the voltage drops across the source and load impedances have to be taken into account but the conclusions are essentially the same.

Inverted diode pair embodiment

As an example of the embodiment of Fig. 13b consider taking each of the one-ports to consist of a diode in parallel with a resistor. The resulting network can be simplified (by combining the two resistors in parallel) to that of Fig. 15. The capacitors and the inductors are added for biasing purposes to block the DC and AC currents respectively. The circuit is controlled by the three biasing voltages $V_1$, $V_2$, $V_3$. In particular $V_3$ may be grounded, in which case the system is controlled by $V_1$ and $V_2$. If the diodes are matched the biasing condition for the removal of second harmonic is $V_2 = \frac{1}{2}(V_1 + V_3)$. If the diodes are not matched, detuning $V_2$ away from the midpoint between $V_1$ and $V_3$ cancels the second order coefficient, and tuning $V_1 - V_3$ tunes the third order coefficient.

Notice that the resistor provides a linear path for the signal, providing a sizable $g_1$ coefficient, while the diodes yield a small non-linear perturbation of an otherwise linear characteristic.

Assuming matched devices, the I-V characteristic of each diode-resistor one-port is given by $I_0(V) = I^{sat}e^{v/v}T + V/(2R)$, with

$$V_T = \frac{kt}{q} \, ,$$

therefore the combined characteristic is given by

$$I(V) = I_0(V) - I_0(-V) = 2I^{sat} \sinh \left(\frac{V}{V_T}\right) + \frac{V}{R} \tag{56}$$

If the diodes are not matched, $I_1^{sat} \neq I_2^{sat}$. Let $I_1^{sat} - I_2^{sat} = 2I_\Delta$, $\bar{I}^{sat} = \frac{1}{2}(I_1^{sat} + I_2^{sat})$ and $\bar{V} = \frac{1}{2}(V_1 + V_3)$ and express the imbalance in bias voltages on the diodes in terms of $V_\Delta$, the deviation away from the midpoint:

$$V_1 - V_2 = \bar{V} + V_\Delta \tag{57}$$

and

$$V_2 - V_3 = \bar{V} - V_\Delta \tag{58}$$

In this case the combined characteristic may be shown to be

$$I(V) = 2e^{\bar{V}/V}T[\bar{I}^{sat}\sinh \left(\frac{V + V\Delta}{V_T}\right) + I_\Delta \cosh \left(\left(\frac{V + V_\Delta}{V_T}\right)\right)] \tag{59}$$

Notice that if $V_\Delta = O$ the sinh is antisymmetric and the cosh is symmetric, i.e., it contributes even components, however by tuning $V_\Delta \neq 0$ (achieved by tuning the voltage $V_2$) the system may be brought to antisymmetry as explained above in eqs. 54 and 55.

Differentially driven matched two-ports embodiment

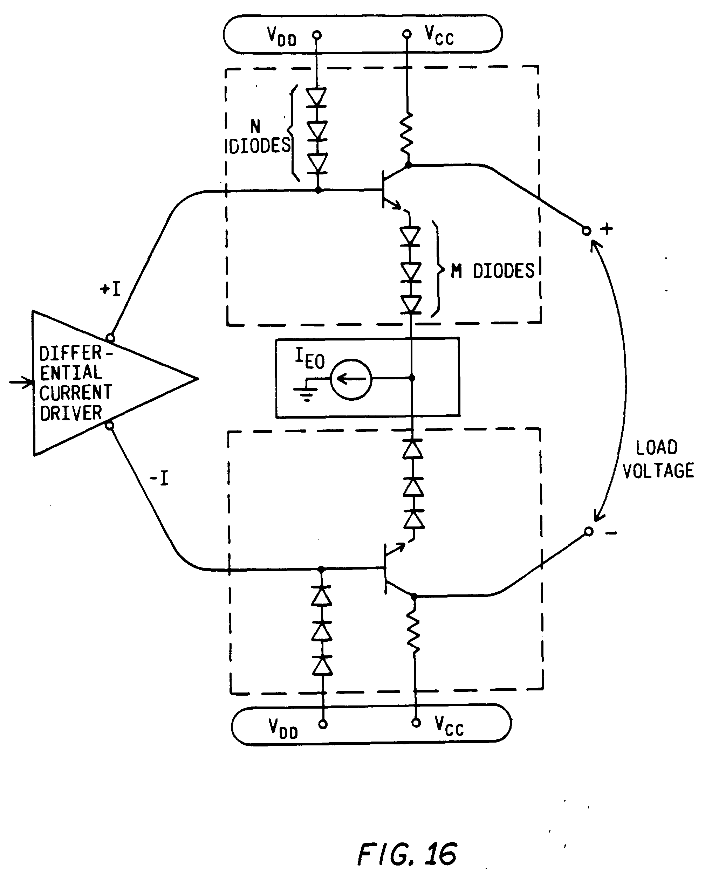

As an example of the embodiment of Fig. 13c consider the circuit of Fig. 16 with N diodes connected to the base of the bipolar transistor and with M - 1 diodes connected to the emitter (M diodes counting the emitter diode).

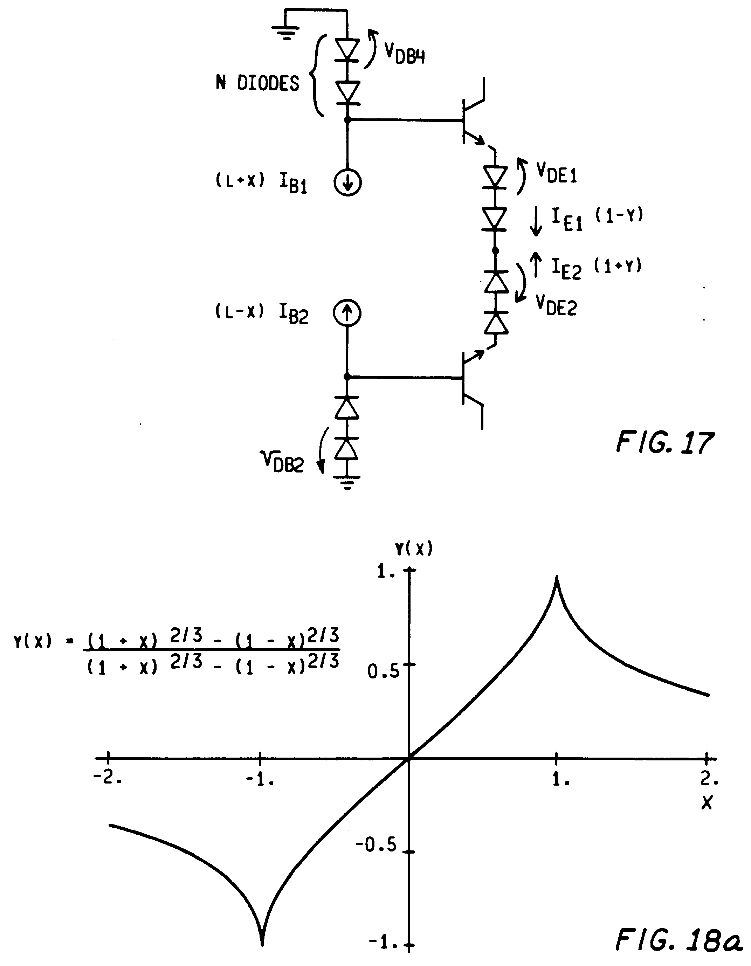

An analysis of the circuit of Fig. 16 shown in the model of Fig. 17.

The differentially driven currents sinking the bases are expressed as $I_{B1}(1 + x)$ and $I_{B2}(1 - Sx)$ where x is the normalized input to the differential driver. Notice that this notation allows for different quiescent currents $I_{B1}$ and $I_{B2}$ when x = 0 and for unbalanced gains of the two differential arms ($S \neq 1$). Similarly the output emitter currents are written as $I_{E1}(1 - y)$ and $I_{E2}(1 + Ry)$. In this case due to Kirchoff's current law (sum of two currents equal to the constant current sinked by the common emitter source) one has

$$R = \frac{I_{E1}}{I_{E2}} \tag{60}$$

The sum of all diode drops through the 2N + 2M diodes should be zero:

$$NV_{DB1} + MV_{DE1} - MV_{DE2} - NV_{DB2} = 0 \tag{61}$$

The V-I characteristic for a diode is

$$V = \frac{kT}{q} \ln \frac{I}{I^{sat}} \tag{62}$$

Substituting eq. 62 in eq. 61 yields

$$N \ln \frac{I_{B1}(1 + x)}{I_{B1}^{sat}} + M \ln \frac{I_{E1}(1 - y)}{I_{E1}^{sat}} =$$

$$N \ln \frac{I_{B2}(1 - Sx)}{I_{B2}^{sat}} + M \ln \frac{I_{E2}(1 + Ry)}{I_{E2}^{sat}} \tag{63}$$

This may be further expressed as

$$(\frac{I_{B1}}{I^{sat}_{B1}})^N \; (\frac{I_{E1}}{I^{sat}_{E1}})^M \; (1+x)^N \; (1-y)^M =$$

$$(\frac{I_{B2}}{I^{sat}_{B2}})^N \; (\frac{I_{E2}}{I^{sat}_{E2}})^M \; (1-Sx)^N(1+Ry)^M \tag{64}$$

Raising eq. 64 to the power 1/M and defining N/M = σ yields:

$$F \, (\frac{1+x}{1-Sx})^\sigma = (\frac{1+Ry}{1-y}) \tag{65}$$

with

$$F = (\frac{I_{B1}/I_{B2}}{I^{sat}_{B1}/I^{sat}_{B2}})^\sigma \; (\frac{I_{E1}/I_{E2}}{I^{sat}_{E1}/I^{sat}_{E2}}) \tag{66}$$

Solving for y:

$$y = \frac{F(\frac{1+x}{1-Sx})^\sigma - 1}{F(\frac{1+x}{1-Sx})^\sigma + R} \tag{67}$$

If R = 1 = S

$$y = \frac{F \, (1+x)^\sigma - (1-x)^\sigma}{F \, (1+x)^\sigma + (1-x)^\sigma} \tag{68}$$

If, additionally, F = 1

$$y = \frac{(1+x)^\sigma - (1-x)^\sigma}{(1+x)^\sigma + (1-x)^\sigma} \tag{69}$$

Notice that in this case there is odd wave symmetry: y(-x) = -y(x). If further σ = 1 then y = x and we get a linear characteristic.

If R = 1 = S and F ≠ 1 there is an even part to y(x).

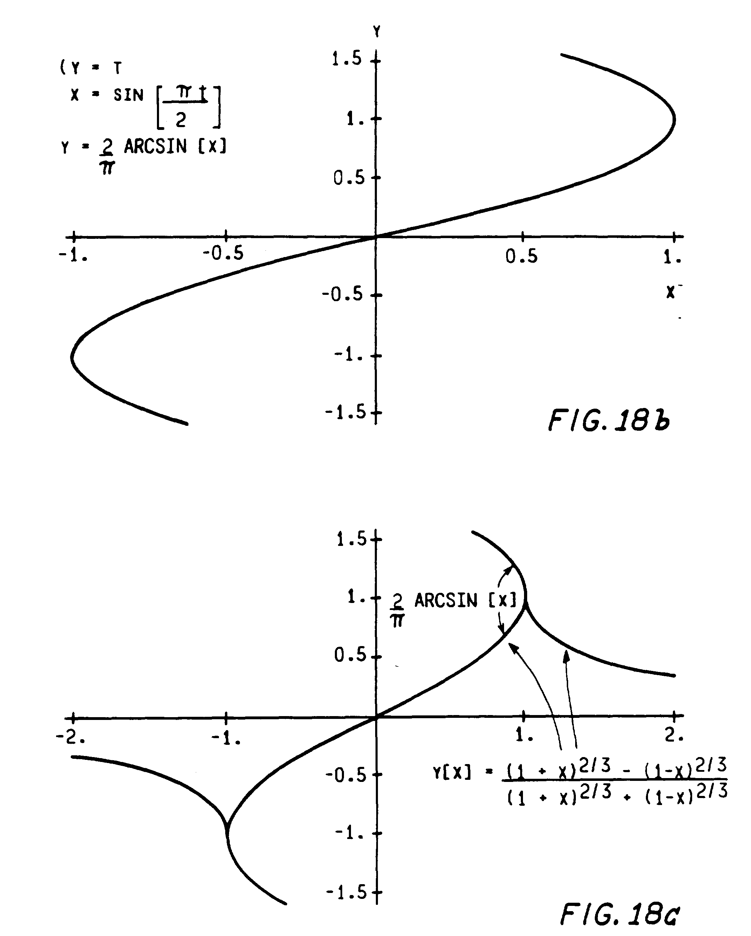

The odd-wave transfer characteristic of eq. 69 is described in Fig. 18a for σ = 2/3 as obtained for N = 2 and M = 3. Fig. 18b plots an arcsin(x) characteristic which in a memoriless system would provide perfect compensation of the sin(x) modulator non-linearity: sin(arcsin(x)) = x. Some suitable scaling factors are also provided. It is apparent that eq. 69 provides a good approximation to the ideal arcsin(x) characteristic.

Notice that because of the excellent overall matching of the two characteristics, whenever the parametric feedback system nulls out the third order harmonic distortion, it will automatically, for the same values of the tuning parameters also provide nulling of higher orders of nonlinearity, e.g. the 5th and 7th order.

Further Applications and Generalizations

The claimed invention may be further generalized to cover higher than third order terms by including harmonic detectors to monitor the higher order harmonics and intermodulation tones and feeding to control parameters which affect the relative magnitudes of higher order coefficients.

Another application of the claimed invention is to systems which use direct modulation of the light source rather than external modulation. In this case the description above literally applies for direct modulation around an inflection point of the light vs. current characteristic of a laser source. If no such operating point can be found then the mode of operation described in the last section applies, with the linearizer detuned away from the odd-wave operating point in such a way that the second order term of the linearizer nulls out the second order term of the laser (in the external modulation case, the modulator was tuned so as to null out the linearizer, here the cause-effect roles of linearizer and optical source are reversed but the mathematics is the same).

The described methods of linearization of broadband systems apply not only to analog signal transmission and distribution, but also to digital transmission as well as to mixed modes of transmission combining digital and analog techniques, such as sub-carrier multiplexing in which case digital channels are combined by analog frequency division multiplexing. In general the transmission of digital signals is less prone to the degrading effects of nonlinearities, thus the linearization techniques of this invention will be of particular importance to special cases, for example:

1. Digital spread spectrum transmission which is very sensitive to the degradation of the phase response due to the non-linearity of the transmission channel.

2. Sub-carrier multiplexed methods, whereby a large number of digital channels are combined by analog frequency division multiplexing.

**Claims**

1. An optical transmission or distribution system for broadband signals comprising an optical transmitter having an optical light source (901) and an electrical-to-light modulations means (902) with an information signal input and comprising means for tuning the bias point on the nonlinear modulation transfer characteristic of said modulation means or means for modifying the shape of the said transfer characteristic, a fiber optic distribution network and at least one optical receiver, a monitoring optical receiver (905), means to route a portion of the transmitted optical power to said monitoring optical receiver, and a parametric feedback system comprising means to superpose at least two pilot signals upon the electrical modulation signal, means (1106) for providing electronic preconditioning of said electrical modulation signal prior to it driving said modulation means and after said pilot signals have been superposed, comprising means for providing non-linear predistortion, and/or linear amplification, and/or means to modify the shape of the nonlinear transfer characteristic of said means for providing electronic preconditioning or to tune the magnitude of at least one of the Taylor series coefficents of said transfer characteristic of said pre-conditioning means, said system characterized by means to extract error signals (907, 908) indicative of the deviations of the overall system away from the optimum points of intermodulation, by monitoring the amount of at least some intermodulation frequencies of the pilot signals generated by interaction of said pilot signals with the overall non-linearity of said optical transmitter,

   means to electronically process (909) said error signals to provide processed error signals, and
   means to feedback said processed error signals to said means for tuning the bias point and/or to said means for modifying said shape of said transfer characteristic of said modulation means and/or to said means for providing electronic preconditioning, in order to bring and keep the overall transfer characteristic of said modulation means and/or of said means for providing electronic pre-conditioning to bias values where the intermodulation components in the spectrum of the modulated signal at the output of said optical transmitter are minimized or substantially nulled out.

2. An optical transmission or distribution system as in claim 1 wherein said light source (901) comprises a continuous wave laser and said modulation means comprises an external integrated optic electro-optic modulator (902) with one optical input and with at least one optical output.

3. An optical transmission or distribution system as in claim 2 wherein said external integrated optic modulator (902) comprises an integrated optic Mach-Zehnder interferometer, a directional coupler, a 1 x 2 balanced bridge interferometer, or a 2 x 2 balanced bridge interferometer.

4. An optical transmission or distribution system as in claim 1 wherein said optical light source and said modulation means being constituted by a directly modulated laser.

5. An optical transmission or distribution system as in claim 2, 3 or 4 wherein said means (906) for tuning said bias point of said modulation means comprises an electronic circuit which additively superposes a slowly varying biasing signal upon the information signal.

6. An optical transmission or distribution system as in claim 2 or 3 wherein said means for tuning said bias point of said modulator comprises an electrode structure on said modulator, electrically isolated from a broadband modulation electrode structure and connected to an electrical biasing means separate from the information signal input of the modulating means.

7. An optical transmission or distribution system as in claims 1, 2, 3 or 4 wherein said pilot signals are chosen such that the spectrum of harmonic distortion and/or intermodulation which is generated by said pilot signals in the presence of residual overall non-linearity of the system, is disjoint in frequency from the spectrum of the modulating signal and is disjoint in frequency from the spectrum of the harmonic distortion components generated by said information signal.

8. An optical transmission or distribution system as in claim 7 wherein said at least two pilot signals are used such that at least one of the second order and/or third order intermodulation products generated by said pilot signals in the presence of overall nonlinerarity are disjoint in frequency from the spectrum of said information signal or the spectrum of intermodulation and harmonic distortion components generated by said modulating information signal.

9. An optical transmission or distribution system as in claims 1, 2, 3, or 4 wherein said means for providing non-linear distortion comprises a nonlinear electrical network (1201) that nominally has an odd-wave transfer characteristic wherein opposite polarity inputs generate opposite polarity outputs and comprising a parametric tuning input used to tune the third order Taylor coefficient of the transfer characteristic of said means for providing non-linear pre-distortion.

10. An optical transmission or distribution system as in claim 1 wherein the tuning of the Taylor series coefficients is achieved by tuning said means for providing linear amplification and/or means for linear frequency equalization, and/or by tuning the bias points of said means for providing non-linear pre-distortion.

11. An optical transmission or distribution system as in claim 9 wherein said odd-wave non-linear network comprises two nominally identical networks symmetrically or antisymmetrically inter-connected and connected to biasing networks.

12. An optical transmission or distribution system as in claim 10 wherein said means for providing linear frequency equalization comprises an electrical network that provides an overall frequency response such that the variations over frequency of the gain and of the group delay of the overall system are minimized.

13. An optical transmission or distribution system as in claim 12 wherein the frequency response of said modulator and the frequency response of said means for providing electronic preconditioning provide substantially constant group delay, while providing an amplitude response which diminishes a substantially small amount over frequency, and wherein said means for providing linear frequency equalization comprises a high-pass or bandpass filter with its low cut-off frequency substantially higher than the bandwidth of said modulating signal, such that the roll-off of the frequency response of said modulating means and of said means for providing electronic preconditioning are counteracted by the rising magnitude response of said frequency equalizing electrical network and such that the group delay frequency dependence of said means for providing linear frequency equalization is substantially constant.

14. An optical transmission or distribution system as in claim 1 wherein said means for providing non-linear distortion comprises biasing means to modify the shape of the transfer characteristic or the magnitudes of at least one of at least the first three Taylor series coefficients of the said two half networks such that a set of biasing conditions may be established where the resulting overall transfer characteristic is odd-wave even though the two half networks are not precisely matched to each other.

15. An optical transmission or distribution system as in claim 14 wherein said biasing means is used to tune out the even-wave components of the said pre-distortion network by applying additive shifts to the operating points of the two half-networks.

16. An optical transmission or distribution system as in claim 14 wherein said pre-distortion network attains an odd-wave transfer characteristic by an electronic parametric feedback system comprising:

means for detecting the presence of second order distortion, namely second harmonic or second order intermodulation products of said pilot signals at the electronic output of said means for providing electronic pre-conditioning, and
means to feed back the output of the said means for detecting the presence of second order distortion to said biasing means in order to substantially null out the second order distortion, at the output of the pre-conditioning means resulting in a substantially odd wave characteristic.

17. An optical transmission or distribution system as in claims 2 or 3 wherein said means for providing electronic preconditioning yields a substantially small second order Taylor coefficient of its transfer characteristic which said parametric feedback system acts to cancel by providing feedback to the tuning parameter of an opposing second order Taylor coefficient of said modulation means.

18. An optical transmission or distribution system as in claim 4 wherein said parametric feedback system acts to cancel a small residual second order Taylor coefficient of the transfer characteristic of the direct laser modulation means by providing feedback to the tuning parameter of the second order Taylor coefficient of the transfer characteristic of the said means for providing electronic preconditioning.

19. An optical transmission or distribution system as in claim 1 wherein said odd-wave nonlinear network comprises two nominally identical one-port networks inverted with respect to each other and electrically connected in series with each other. (Fig. 13a)

**20.** An optical transmission or distribution system as in claim 1 wherein said odd-wave nonlinear network comprises two nominally identical one-port networks inverted with respect to each other and connected in parallel with each other. (Fig. 13b)

**21.** An optical transmission or distribution system as in claim 1 wherein said odd-wave nonlinear network comprises two nominally identical two-port networks connected in a symmetric arrangement such that congruent inputs are connected to the two complementary outputs of a differential driver which provides opposing polarities on its two outputs, and the output is also differentially taken between congruent output ports of said two-port networks. (Fig. 13c)

**22.** An optical transmission or distribution system as in claim 19 or 20 wherein said one-port networks each comprise a parallel connection of a diode and a resistor and means for biasing the two diodes in their active regions of operation.

**23.** An optical transmission or distribution system as in claim 22 wherein said means for biasing comprises a tuning voltage across the path including two diodes to tune the third order Taylor series coefficient over an operating range and a tuning voltage at the mid-point between the diodes in order to tune the second order Taylor coefficient to a substantially null value.

**24.** An optical transmission or distribution system as in claim 2 wherein said two-port networks each comprise:

a bipolar junction transistor with a chain of N diodes connected to its base, a chain of M-1 diodes connected to its emitter, and with a load resistor connected to its collector,
means to extract the output as the differential voltage across the two collectors of the said two transistors, and
means to bias the transistor in its active region of operation and to bias the combination of two two-port networks to an odd-wave characteristic, and wherein said optical transmission or distribution system further comprises a differential current course driving with opposite current polarities said diode chains that are connected to the transistor bases in the two said two-port networks. (Fig. 16)

**25.** An optical transmission or distribution system as in claim 24 wherein N=2 and M=3, nominally resulting in a transfer characteristic that provides a close approximation to the arcsine characteristic ideally required to cancel all orders of distortion for an ideal sinusoidal drive of said modulation means.

**26.** An optical transmission or distribution system as in claims 1, 2, 3, or 4 wherein said means to route a portion of transmitted optical power to said monitoring receiver comprises a bulk optics beamsplitter or a fiber optic tap or coupler.

**27.** An optical transmission or distribution system as in claims 1, 2, 3 or 4 wherein said means to route a portion of transmitted optical power to said monitoring receiver comprises an integrated optic tap or coupler contained on the same integrated optic substrate as said integrated optic modulator.

**28.** An optical transmission or distribution system as in claims 1, 2, 3 or 4 wherein said means to extract error signals comprise harmonic distortion detectors comprising synchronous, coherent, or lock-in electronic detector circuits comprising a demodulation means performing multiplication, chopping, or switching of the input signal with a reference signal harmonically related to the distortion frequency under test and subsequent low-pass filtering. (Fig. 10)

**29.** An optical transmission or distribution system as in claims 1 and 28 wherein the reference signal for the second order distortion detector has a frequency equal to a sum or difference of two of the pilot signal fundamental frequencies, and wherein the reference signal for the third order distortion detector has a reference frequency equal to $\pm 2w_1 \pm w_2$ or $\pm w_1 \pm 2w_2$ in the case of two pilot signals or $\pm w_1 \pm w_2 \pm w_3$ in the case of three pilot signals, where $w_1$, $w_2$, and $w_3$ are the fundamental frequencies of the pilot tones.

**30.** An optical transmission or distribution system as in claim 1 wherein said electronic processing means are each realized as low-pass loop filters each connected to one output of one of the said means of extracting error signals.

31. An optical transmission or distribution system as in claim 1 wherein said modulating signal comprises an analog broadband signal.

32. An optical transmission or distribution system as in claim 1 wherein said modulating signal comprises a frequency division multiplexed multichannel signal combining a plurality of individual channel signals.

33. An optical transmission or distribution system as in claim 32 wherein said individual channel signals comprise AM/VSB or other formats of video modulation signals.

34. An optical transmission or distribution system as in claim 1 wherein said modulation signal comprises a digital signal.

35. An optical transmission or distribution system as in claim 33 wherein the individual channel signals comprise digital signals.

36. An optical transmission or distribution system as in claim 1 wherein said modulating signal comprises a digital spread spectrum signal.

37. An optical transmission or distribution system as in claim 1 wherein said means for providing electronic preconditioning has a transfer characteristic with a shape function substantially identical to the inverse of the transfer characteristic of said modulation means, such that said parametric feedback system automatically acts to cancel or diminish harmonic distortion and intermodulation orders higher than the third whenever it acts to cancel up to third order overall nonlinear Taylor series coefficients, by virtue of the operation of parametric feedback on the second and third harmonic.

38. An optical transmission or distribution system as in claim 2 wherein said continuous-wave laser comprises a diode pumped solid state laser, or a distributed feedback semiconductor laser.

39. An optical transmission or distribution system as in claim 4 wherein said directly modulatable laser comprises a distributed feedback semiconductor laser, or an external cavity laser or a Fabri-Perot semiconductor laser.


**Patentansprüche**

1. Ein optisches Übertragungs- oder Verteilungssystem für Breitbandsignale, umfassend einen optischen Sender mit einer optischen Lichtquelle (901) und einem Elektro-Licht-Modulationsmittel (902) mit einem Informationssignaleingang und mit Mitteln für das Abstimmen des Vorspannpunkts auf der nichtlinearen Modulationstransfercharakteristik des Modulationsmittels oder mit Mitteln für das Modifizieren der Form der Transfercharakteristik, ein faseroptisches Verteilungsnetzwerk, und mindestens einen optischen Empfänger, einen optischen Überwachungsempfänger (905), Mitteln zum Überführen eines Anteils der übertragenen optischen Leistung zu dem optischen Überwachungsempfänger und ein parametrisches Rückkopplungssystem, umfassend Mittel zum Überlagern mindestens zweier Pilotsignale auf das elektrische Modulationssignal, Mittel (1106) für das Bereitstellen einer elektronischen Vorabkonditionierung des elektrischen Modulationssignals, bevor es das Modulationsmittel ansteuert und nachdem die Pilotsignale überlagert worden sind, umfassend Mittel für das Bereitstellen nichtlinearer Vorverzerrung und/oder linearer Verstärkung und/oder Mittel zum Modifizieren der Form der nichtlinearen Transfercharakteristik der Mittel für das Bereitstellen der elektronischen Vorabkonditionierung oder zum Abstimmen der Größe von mindestens einem der Taylor Reihenkoeffizienten der Transfercharakteristik des Vorkonditioniermittels, welches System gekennzeichnet ist durch Mittel zum Extrahieren von Fehlersignalen (907, 908), die indikativ sind für die Abweichungen des Gesamtsystems weg von den Optimalpunkten der Intermodulation durch Überwachen der Größe von mindestens einigen Intermodulationsfrequenzen der Pilotsignale, erzeugt durch Wechselwirkung der Pilotsignale mit der Gesamtnichtlinearität des optischen Senders,

Mittel zum elektronischen Verarbeiten (909) der Fehlersignale zum Bereitstellen von verarbeiteten Fehlersignalen, und

Mittel zum Rückkoppeln der verarbeiteten Fehlersignale auf die Mittel für das Abstimmen des Vorspannpunktes und/oder der Mittel für das Modifizieren der Form der Transfercharakteristik der Modulationsmittel und/oder der Mittel für das Bereitstellen der elektronischen Vorabkonditionierung, um die Gesamttransfercharakteristik der Modulationsmittel und/oder der Mittel für das Bereitstellen der elektronischen Vorabkonditionierung auf

EP 0 407 919 B1

Vorspannwerte zu bringen oder zu halten, wo die Intermodulationskomponenten im Spektrum des modulierten Signals am Ausgang des optischen Senders minimiert oder im wesentlichen auf null gebracht sind.

2. Ein optisches Übertragungs- oder Verteilungssystem nach Anspruch 1, bei dem die Lichtquelle (901) einen Dauerwellenlaser umfaßt und die Modulationsmittel einen externen, integrierten, optischen, elektro-optischen Modulator (902) umfassen mit einem optischen Eingang und mindestens einem optischen Ausgang.

3. Ein optisches Übertragungs- oder Verteilungssystem nach Anspruch 2, bei dem der externe, integrierte, optische Modulator (902) ein integriertes, optisches Mach-Zehnder Interferometer, einen Richtungskoppler, ein 1x2 abgeglichenes Brückeninterferometer oder ein 2x2 abgeglichenes Brückeninterferometer umfaßt.

4. Ein optisches Übertragungs- oder Verteilungssystem nach Anspruch 1, bei dem die optische Lichtquelle und die Modulationsmittel von einem direkt modulierten Laser gebildet sind.

5. Ein optisches Übertragungs- oder Verteilungssystem nach Anspruch 2, 3 oder 4, bei dem das Mittel (906) für das Abstimmen des Vorspannpunktes der Modulationsmittel einen elektronischen Schaltkreis umfaßt, der additiv ein sich langsam änderndes Vorspannsignal dem Informationssignal überlagert.

6. Ein optisches Übertragungs- oder Verteilungssystem nach Anspruch 2 oder 3, bei dem die Mittel für das Abstimmen des Vorspannpunktes des Modulators eine elektronische Struktur auf dem Modulator umfassen, elektrisch isoliert von einer Breitbandmodulationselektrodenstruktur und verbunden mit einem elektrischen Vorspannmittel, das separat von dem Informationseingang des Modulationsmittels ist.

7. Ein optisches Übertragungs- oder Verteilungssystem nach den Ansprüchen 1, 2, 3 oder 4, bei dem die Pilotsignale so gewählt sind, daß das Spektrum der harmonischen Verzerrung und/oder Intermodulation, das durch die Pilotsignale bei Vorhandensein von Restgesamtnichtlinearität des Systems erzeugt wird, in der Frequenz von dem Spektrum des Modulationssignals entfernt ist und in der Frequenz vom Spektrum der harmonischen Verzerrungskomponenten entfernt ist, erzeugt durch das Informationssignal.

8. Ein optisches Übertragungs- oder Verteilungssystem nach Anspruch 7, bei dem mindestens zwei Pilotsignale derart verwendet werden, daß zumindest eines der Intermodulationsprodukte zweiter und/oder dritter Ordnung, erzeugt durch die Pilotsignale bei Vorhandensein von Gesamtnichtlinearität, in der Frequenz abliegen vom Spektrum des Informationssignals oder vom Spektrum der Intermodulation und harmonischen Verzerrungskomponenten, erzeugt durch das Modulationsinformationssignal.

9. Ein optisches Übertragungs- oder Verteilungssystem nach Ansprüchen 1, 2, 3 und 4, bei dem die Mittel für das Bereitstellen nichtlinearer Verzerrung ein nichtlineares elektrisches Netzwerk (1201) umfassen, das nominell eine Transfercharakteristik ungeradzahliger Wellen aufweist, bei dem entgegengesetzte Polaritätseingänge entgegengesetzte Polaritätsausgänge erzeugen, und mit einem parametrischen Abstimmeingang, verwendet zum Abstimmen des Taylor Koeffizienten dritter Ordnung der Transfercharakteristik des Mittels für das Bereitstellen der nichtlinearen Vorabverzerrung.

10. Ein optisches Übertragungs- oder Verteilungssystem nach Anspruch 1, bei dem das Abstimmen der Taylor Reihenkoeffizienten erzielt wird durch Abstimmen der Mittel für das Bereitstellen linearer Verstärkung und/oder Mittel für lineare Frequenzegalisierung und/oder durch Abstimmen der Vorspannpunkte des Mittels für das Bereitstellen nichtlinearer Vorverzerrung.

11. Ein optisches Übertragungs- oder Verteilungssystem nach Anspruch 9, bei dem das nichtlineare Netzwerk ungeradzahliger Wellen zwei nominell identische Netzwerke umfaßt, die symmetrisch oder antisymmetrisch miteinander vernetzt und mit Vorspannnetzwerken verbunden sind.

12. Ein optisches Übertragungs- oder Verteilungssystem nach Anspruch 10, bei dem Mittel für das Bereitstellen einer linearen Frequenzegalisierung ein elektrisches Netzwerk umfassen, das einen Gesamtfrequenzgang bereitstellt derart, daß die Veränderungen über der Frequenz der Verstärkung und der Gruppenverzögerung des Gesamtsystems minimiert werden.

13. Ein optisches Übertragungs- oder Verteilungssystem nach Anspruch 12, bei dem der Frequenzgang des Modulators und der Frequenzgang der Mittel für das Bereitstellen elektronischer Vorabkonditionierung im wesentlichen

22

konstante Gruppenverzögerung bewirken, während eine Amplitudenreaktion bereitgestellt wird, die um einen erheblich kleineren Grad über der Frequenz absinkt, und bei dem die Mittel für das Bereitstellen linearer Frequenzegalisierung ein Hoch-pass- oder Bandpassfilter umfassen mit einer Tiefenabschneidefrequenz, die erheblich höher ist als die Bandbreite des Modulationssignals derart, daß das Abrollen des Frequenzganges der Modulationsmittel und der Mittel für das Bereitstellen elektronischer Vorabkonditionierung entgegengewirkt wird durch ansteigende Größenreaktion des elektrischen Frequenzegalisiernetzwerks und derart, daß die Gruppenverzögerungsfrequenzabhängigkeit der Mittel für das Bereitstellen der linearen Frequenzegalisierung im wesentlichen konstant ist.

14. Ein optisches Übertragungs- oder Verteilungssystem nach Anspruch 1, bei dem die Mittel für das Bereitstellen der nichtlinearen Verzerrung Vorspannmittel umfassen zum Modifizieren der Form der Transfercharakteristik oder der Größe von zumindest einem von zumindest den ersten drei Taylor Reihenkoeffizienten der zwei Halbnetzwerke derart, daß ein Satz von Vorspannbedingungen etabliert werden kann, wo die resultierende Gesamttransfercharakteristik ungeradwellig ist, selbst dann, wenn die beiden Halbnetzwerke nicht genau aneinander angepaßt sind.

15. Ein optisches Übertragungs- oder Verteilungssystem nach Anspruch 14, worin die Vorspannmittel verwendet werden zum Ausblenden der Gleichwellenkomponenten des Vorverzerrungsnetzwerks durch Anwenden additiver Verschiebungen auf die Betriebspunkte der beiden Halbnetzwerke.

16. Ein optisches Übertragungs- oder Verteilungssystem nach Anspruch 14, worin das Vorverzerrungsnetzwerk eine Ungeradwellentransfercharakteristik erzielt durch ein elektronisches, parametrisches Rückkopplungssystem, umfassend:

Mittel für das Erfassen des Vorhandenseins von Verzerrung zweiter Ordnung, nämlich sekundäre harmonische oder sekundäre Intermodulationsprodukte der Pilotsignale an dem elektronischen Ausgang der Mittel für das Bereitstellen der elektronischen Vorabkonditionierung, und
Mittel zum Rückkoppeln des Ausgangs der Mittel für das Erfassen des Vorhandenseins der Sekundärorderverzerrung auf die Vorspannmittel, um im wesentlichen die Sekundärverzerrung auszubalancieren am Ausgang der Vorabkonditioniermittel, resultierend in einer im wesentlichen ungeradwelligen Charakteristik.

17. Ein optisches Übertragungs- oder Verteilungssystem nach Anspruch 2 oder 3, worin die Mittel für das Bereitstellen elektronischer Vorabkonditionierung einen im wesentlichen kleinen Taylor Koeffizienten zweiter Ordnung seiner Transfercharakteristik ergibt, wobei das parametrische Rückkopplungssystem so wirkt, daß die Auslöschung erfolgt durch Bereitstellen von Rückkopplung auf den Abstimmparameter eines entgegengerichteten Taylor Koeffizienten zweiter Ordnung der Modulationsmittel.

18. Ein optisches Übertragungs- oder Verteilungssystem nach Anspruch 4, bei dem das parametrische Rückkopplungssystem zum Unterdrükken eines kleinen, restlichen Taylor Koeffizienten zweiter Ordnung der Transfercharakteristik der direkten Lasermodulationsmittel wirkt durch Bereitstellen von Rückkopplung auf den Abstimmparameter des Taylor Koeffizienten zweiter Ordnung der Transfercharakteristik des Mittels für das Bereitstellen der elektronischen Vorabkonditionierung.

19. Ein optisches Übertragungs- oder Verteilungssystem nach Anspruch 1, bei dem das ungeradwellige, nichtlineare Netzwerk zwei nominell identische Ein-Eingangsnetzwerke umfaßt, die invertiert sind relativ zueinander und elektrisch miteinander in Serie geschaltet sind (Fig. 13a).

20. Ein optisches Übertragungs- oder Verteilungssystem nach Anspruch 1, bei dem das ungeradwellige, nichtlineare Netzwerk zwei nominell identische Ein-Eingangsnetzwerke umfaßt, relativ zueinander invertiert und parallel zueinander geschaltet (Fig. 13b).

21. Ein optisches Übertragungs- oder Verteilungssystem nach Anspruch 1, bei dem das ungeradwellige, nichtlineare Netzwerk zwei nominell identische Zwei-Eingangsnetzwerke umfaßt, in einer symmetrischen Anordnung derart geschaltet, daß kongruente Eingänge mit den zwei komplementären Ausgängen eines Differentialtreibers verbunden sind, der entgesetzte Polaritäten an seinen beiden Ausgängen liefert und der Ausgang außerdem differentiell zwischen kongruenten Ausgängen des Zwei-Eingangsnetzwerks abgreift (Fig. 13c).

22. Ein optisches Übertragungs- oder Verteilungssystem nach Anspruch 19 oder 20, bei dem die Ein-Eingangsnetzwerke jedes eine Parallelschaltung einer Diode und eines Widerstandes umfaßt sowie Mittel für das Vorspannen der beiden Dioden in ihren aktiven Betriebsbereichen.

23. Ein optisches Übertragungs- oder Verteilungssystem nach Anspruch 22, bei dem die Mittel für das Vorspannen eine Abstimmspannung über dem Pfad einschließlich zweier Dioden umfassen zum Abstimmen des Taylor Reihenkoeffizienten dritter Ordnung über einen Betriebsbereich und eine Abstimmspannung an dem Mittelpunkt zwischen den Dioden, um den Taylor Koeffizienten zweiter Ordnung auf den im wesentlichen bei null liegenden Wert abzustimmen.

24. Ein optisches Übertragungs- oder Verteilungssystem nach Anspruch 2, bei dem die Zwei-Eingangsnetzwerke jedes umfassen:

einen Bipolar-Sperrschichttranssistor mit einer Kette von N-Dioden, die an seine Basis angeschlossen sind, eine Kette von M-1-Dioden, die an seinen Emitter angeschlossen sind und mit einem Lastwiderstand, der an seinen Collector angeschlossen ist,
Mittel zum Extrahieren des Ausgangs als Differentialspannung über den beiden Collectoren der beiden Transistoren, und
Mittel zum Vorspannen des Transistors in seinem aktiven Betriebsbereich und zum Vorspannen der Kombination aus zwei Zwei-Eingangsnetzwerken auf eine ungeradwellige Charakteristik, und bei dem das optische Übertragungs- oder Verteilungssystem ferner eine Differentialstromquelle umfaßt, die mit entgegengesetzten Strompolaritäten die Diodenketten ansteuert, die mit den Transistorbasen in den beiden Zwei-Eingangsnetzwerken verbunden sind (Fig. 16).

25. Ein optisches Übertragungs- oder Verteilungssystem nach Anspruch 24, bei dem N=2 und M=3, was nominell in einer Transfercharakteristik resultiert, die eine Nah-Annäherung an die im Idealfall erforderliche Arcsin-Charakteristik bereitstellt, erforderlich zum Auslöschen aller Ordnungen von Verzerrung für eine ideale Sinusansteuerung des Modulationsmittels.

26. Ein optisches Übertragungs- oder Verteilungssystem nach Anspruch 1, 2, 3 oder 4, bei dem das Mittel zum Überleiten eines Anteils der ausgesandten optischen Leistung zu dem Überwachungsempfänger einen massenoptischen Strahlspalter oder eine faseroptische Anzapfung oder einen Koppler umfaßt.

27. Ein optisches Übertragungs- oder Verteilungssystem nach Anspruch 1, 2, 3 oder 4, bei dem das Mittel zum Überleiten eines Anteils der ausgesandten optischen Leistung zu dem Überwachungsempfänger eine integrierte optische Anzapfung oder einen Koppler umfaßt, enthalten in demselben integrierten optischen Substrat wie der integrierte optische Modulator.

28. Ein optisches Übertragungs- oder Verteilungssystem nach Anspruch 1, 2, 3 oder 4, bei dem das Mittel zum Extrahieren von Fehlersignalen harmonische Verzerrungsdetektoren umfaßt, umfassend elektronische Synchron-, Kohärenz- oder Einhängdetektorschaltkreise, umfassend ein Demodulationsmittel, das Multiplikation, Zerhacken oder Schalten des Eingangssignals ausführt mit einem Referenzsignal, das in harmonischer Beziehung steht mit der Verzerrungsfrequenz, die überprüft wird, und nachfolgende Tief-Pass-Filterung (Fig. 10).

29. Ein optisches Übertragungs- oder Verteilungssystem nach Anspruch 1 und 28, bei dem das Referenzsignal für den Verzerrungsdetektor zweiter Ordnung eine Frequenz hat gleich einer Summe oder Differenz von zwei der Pilotsignalgrundfrequenzen und bei dem das Referenzsignal für den Verzerrungsdetektor dritter Ordnung eine Referenzfrequenz aufweist gleich $\pm 2w_1 \pm w_2$ oder $\pm w_1 \pm 2w_2$ im Falle von zwei Pilotsignalen oder $\pm w_1 \pm w_2 \pm w_3$ im Falle von drei Pilotsignalen, worin $w_1$, $w_2$ und $w_3$ die Grundfrequenzen der Pilottöne sind.

30. Ein optisches Übertragungs- oder Verteilungssystem nach Anspruch 1, bei dem die elektronischen Verarbeitungsmittel jeweils als Tief-Pass-Schleifenfilter ausgeführt sind, jeweils verbunden mit einem Ausgang von einem der Mittel zum Extrahieren von Fehlersignalen.

31. Ein optisches Übertragungs- oder Verteilungssystem nach Anspruch 1, bei dem das Modulationssignal ein analoges Breitbandsignal umfaßt.

32. Ein optisches Übertragungs- oder Verteilungssystem nach Anspruch 1, bei dem das Modulationssignal ein Frequenzteiler-Multiplex-Mehrkanalsignal umfaßt, das eine Mehrzahl von Einzelkanalsignalen kombiniert.

**33.** Ein optisches Übertragungs- oder Verteilungssystem nach Anspruch 32, bei dem die einzelnen Kanalsignale AM/VSB oder andere Formate von Videomodulationssignalen umfassen.

**34.** Ein optisches Übertragungs- oder Verteilungssystem nach Anspruch 1, bei dem das Modulationssignal ein Digitalsignal umfaßt.

**35.** Ein optisches Übertragungs- oder Verteilungssystem nach Anspruch 33, bei dem die Einzelkanalsignale Digitalsignale umfassen.

**36.** Ein optisches Übertragungs- oder Verteilungssystem nach Anspruch 1, bei dem das Modulationssignal ein digital gespreiztes Spektralsignal umfaßt.

**37.** Ein optisches Übertragungs- oder Verteilungssystem nach Anspruch 1, bei dem das Mittel für das Bereitstellen der elektronischen Vorabkonditionierung eine Transfercharakteristik mit einer Funktionsform aufweist, im wesentlichen identisch mit dem Inversen der Transfercharakteristik des Modulationsmittels derart, daß das parametrische Rückkopplungssystem automatisch so wirkt, daß die harmonische Verzerrung und Intermodulation in Ordnungen, die höher sind als die dritte, unterdrückt oder vermindert, immer dann, wenn es so wirkt, um die nichtlinearen Taylor Reihenkoeffizienten dritter Ordnung zu unterdrücken, dank der Einwirkung der parametrischen Rückkopplung auf die zweiten und dritten harmonischen.

**38.** Ein optisches Übertragungs- oder Verteilungssystem nach Anspruch 2, bei dem der kontinuierliche Wellenlaser einen diodengepumpten Festkörperlaser oder einen verteilten Rückkopplungshalbleiterlaser umfaßt.

**39.** Ein optisches Übertragungs- oder Verteilungssystem nach Anspruch 4, bei dem der direkt modulierbare Laser einen verteilten Rückkopplungshalbleiterlaser umfaßt oder einen externen Hohlraumlaser oder einen Fabri-Perot Halbleiterlaser.

## Revendications

**1.** Système de transmission ou de distribution optique de signaux à large bande, comprenant un émetteur optique pourvu d'une source de lumière visible (901) et un moyen de modulation électro-optique (902) comportant une entrée de signal d'information et comprenant des moyens pour régler le point de polarisation sur la caractéristique de transfert de modulation non linéaire dudit moyen de modulation ou des moyens pour modifier l'allure de ladite caractéristique de transfert, un réseau de distribution à fibre optique et au moins un récepteur optique, un récepteur optique de surveillance (905), des moyens pour diriger une partie de la puissance optique transmise vers ledit récepteur optique de surveillance, et un système de réaction paramétrique comprenant des moyens pour superposer au moins deux signaux de pilotage sur le signal de modulation électronique, des moyens (1106) de préconditionnement électronique dudit signal de modulation électrique avant que celui-ci ne pilote lesdits moyens de modulation et après que lesdits signaux de pilotage ont été superposés, comprenant des moyens pour provoquer une prédistortion non linéaire, et/ou une amplification linéaire, et/ou des moyens pour modifier l'allure de la caractéristique de transfert non linéaire desdits moyens de préconditionnement électronique ou pour régler l'amplitude d'au moins un des coefficients de la série de Taylor de ladite caractéristique de transfert desdits moyens de préconditionnement, ledit système étant caractérisé par des moyens pour extraire des signaux d'erreur (907,908) indiquant les déviations du système global par rapport aux points optimaux d'intermodulation, en surveillant les taux d'au moins les fréquences qui présentent au moins une certaine intermodulation, des signaux de pilotage, générées par l'interaction desdits signaux de pilotage avec la non linéarité globale dudit émetteur optique.

des moyens (909) pour traiter de façon électronique lesdits signaux d'erreur de manière à fournir des signaux d'erreur traités, et
des moyens pour ramener lesdits signaux d'erreur traités auxdits moyens de réglage du point de polarisation et/ou auxdits moyens pour modifier ladite allure de ladite caractéristique de transfert desdits moyens de modulation et/ou auxdits moyens de préconditionnement électronique, afin d'amener et de maintenir la caractéristique de transfert globale desdits moyens de modulation et/ou desdits moyens de préconditionnement électronique à des valeurs de polarisation où les composants d'intermodulation dans le spectre du signal modulé à la sortie dudit émetteur optique sont minimisés ou pratiquement annulés.

**2.** Système de transmission ou de distribution optique selon la revendication 1, dans lequel ladite source de lumière (901) comporte un laser à onde continue et en ce que lesdits moyens de modulation comportent un modulateur électro-optique externe intégré (902) pourvu d'une entrée optique et d'au moins d'une sortie optique.

3. Système de transmission ou de distribution optique selon la revendication 2 dans lequel ledit modulateur électro-optique externe intégré (902) comporte un interféromètre optique Mac- Zehnder, un coupleur directionnel, un interféromètre à pont équilibré 1x2, ou un interféromètre à pont équilibré 2x2.

4. Système de transmission ou de distribution optique selon la revendication 1 dans lequel ladite source de lumière visible et lesdits moyens de modulation sont constitués par un laser modulé directement.

5. Système de transmission ou de distribution optique selon la revendication 2, 3, ou 4, dans lequel lesdits moyens (906) pour régler ledit point de polarisation desdits moyens de modulation comportent un circuit électronique qui superpose de façon additive un signal de polarisation à variation lente sur le signal d'information.

6. Système de transmission ou de distribution optique selon la revendication 2 ou 3, dans lequel lesdits moyens pour régler ledit point de polarisation dudit modulateur comportent une structure d'électrode sur ledit modulateur, isolée électriquement par rapport à une structure d'électrode de modulation à large bande et connectée à un moyen de polarisation électrique séparé de l'entrée du signal d'information des moyens de modulation.

7. Système de transmission ou de distribution optique selon les revendications 1, 2, 3 ou 4, dans lequel lesdits signaux de pilotage sont choisis de telle manière que le spectre de distortion harmonique et/ou d'intermodulation qui est généré par lesdits signaux de pilotage en présence de la non-linéarité globale résiduelle du système, est disjoint en fréquence par rapport au spectre du signal de modulation et est disjoint en fréquence par rapport au spectre des composants de distorsion harmonique générés par ledit signal d'information.

8. Système de transmission ou de distribution optique selon la revendication 7, dans lequel au moins deux signaux de pilotage sont utilisés de telle manière qu'au moins un des produits d'intermodulation du second ordre et/ou du troisième ordre générés par lesdits signaux de pilotage en présence de la non-linéarité globale, est disjoint en fréquence par rapport au spectre dudit signal d'information ou au spectre des composants d'intermodulation et de distortion harmonique générés par ledit signal d'information de modulation.

9. Système de transmission ou de distribution optique selon les revendications 1, 2, 3 ou 4, dans lequel lesdits moyens pour provoquer une distortion non-linéaire comportent un réseau électrique non linéaire (1201) qui présente de façon nominale une caractéristique de transfert d'onde impaire dans laquelle des entrées de polarités opposées génèrent des sorties de polarités opposées et comprenant une entrée de réglage paramétrique utilisée pour régler le coefficient de Taylor du troisième ordre de la caractéristique de transfert desdits moyens pour provoquer une pré-distortion non linéaire.

10. Système de transmission ou de distribution optique selon la revendication 1, dans lequel le réglage des coefficients de la série de Taylor est effectué en réglant lesdits moyens pour provoquer une amplification linéaire et/ou des moyens d'égalisation linéaire de fréquence, et/ou en réglant les points de polarisation desdits moyens pour provoquer une prédistortion non-linéaire.

11. Système de transmission ou de distribution optique selon la revendication 9, dans lequel ledit réseau non linéaire à onde impaire comporte deux réseaux nominalement identiques interconnectés de façon symétrique ou antisymétrique et connectés aux réseaux de polarisation.

12. Système de transmission ou de distribution optique selon la revendication 10, dans lequel lesdits moyens pour provoquer une égalisation linéaire de fréquence comportent un réseau électrique qui présente une réponse en fréquence globale qui est telle que les variations en fonction de la fréquence, du gain et du retard de groupe du système global, sont minimisées.

13. Système de transmission ou de distribution optique selon la revendication 12, dans lequel la réponse en fréquence dudit modulateur et la réponse en fréquence desdits moyens pour provoquer un préconditionnement électronique présentent un retard de groupe sensiblement constant, tout en présentant une réponse en amplitude qui diminue d'une quantité assez faible en fonction de la fréquence, et dans lequel lesdits moyens pour provoquer une égalisation linéaire de fréquence comportent un filtre passe-haut ou passe-bande ayant une fréquence de coupure inférieure sensiblement plus élevée que la bande passante dudit signal de modulation, de sorte que la diminution de la réponse en fréquence desdits moyens de modulation et desdits moyens de préconditionnement électronique est compensée par la réponse d'amplitude croissante dudit réseau électrique d'égalisation de fréquence et de sorte que la dépendance en fréquence du retard de groupe desdits moyens d'égalisation linéaire en fréquence est sensiblement constante.

**14.** Système de transmission ou de distribution optique selon la revendication 1, dans lequel lesdits moyens pour provoquer une distortion non linéaire comportent des moyens de polarisation pour modifier l'allure de la caractéristique de transfert ou les amplitudes d'au moins l'un d'au moins les trois premiers coefficients des séries de Taylor des deux demi-réseaux, de sorte qu'un ensemble de conditions de polarisation peut être établi, dans lequel la caractéristique de transfert résultante globale est à onde impaire, bien que les deux demi-réseaux ne soient pas précisément appariés.

**15.** Système de transmission ou de distribution optique selon la revendication 14, dans lequel lesdits moyens de polarisation sont utilisés pour éliminer les composantes d'onde paire dudit réseau de prédistortion, en appliquant des décalages additifs aux points de fonctionnement des deux demi-réseaux.

**16.** Système de transmission ou de distribution optique selon la revendication 14, dans lequel ledit réseau de prédistortion obtient une caractéristique de transfert à onde impaire à l'aide d'un système électronique de réaction paramétrique comprenant:

des moyens pour détecter la présence d'une distortion du second ordre, notamment des secondes harmoniques ou des produits d'intermodulation du second ordre desdits signaux de pilotage à la sortie électronique desdits moyens de préconditionnement électronique, et
des moyens pour ramener la sortie desdits moyens de détection de la présence de distortion du second ordre vers lesdits moyens de polarisation afin de pratiquement annuler la distortion du second ordre, à la sortie des moyens de préconditionnement entraînant une caractéristique pratiquement à onde impaire.

**17.** Système de transmission ou de distribution optique selon la revendication 2 ou 3, dans lequel lesdits moyens de préconditionnement électronique entraînent un coefficient de Taylor du second ordre relativement faible de leur caractéristique de transfert, que ledit système de réaction paramétrique a pour effet de supprimer en provoquant une réaction au paramètre de réglage d'un coefficient de Taylor du second ordre opposé dudit moyen de modulation.

**18.** Système de transmission ou de distribution optique selon la revendication 4, dans lequel ledit système de réaction paramétrique agit de manière à supprimer un faible coefficient de Taylor du second ordre résiduel de la caractéristique de transfert des moyens de modulation laser directe en fournissant une réaction au paramètre de réglage du coefficient de Taylor du second ordre de la caractéristique de transfert desdits moyens de préconditionnement électronique.

**19.** Système de transmission ou de distribution optique selon la revendication 1, dans lequel ledit réseau non linéaire à onde impaire comporte deux réseaux à simple port nominalement identiques, inversés l'un par rapport à l'autre et connectés électriquement en série l'un avec l'autre. (Fig. 13a)

**20.** Système de transmission ou de distribution optique selon la revendication 1, dans lequel ledit réseau non linéaire à onde impaire comporte deux réseaux à simple port nominalement identiques, inversés l'un par rapport à l'autre et connectés électriquement en parallèle l'un avec l'autre. (Fig. 13b)

**21.** Système de transmission ou de distribution optique selon la revendication 1, dans lequel ledit réseau non linéaire à onde impaire comporte deux réseaux à deux ports nominalement identiques, connectés selon une disposition symétrique de sorte que les entrées congruentes sont connectées aux deux sorties complémentaires d'un circuit différentiel qui fournit des polarités opposées sur ses deux sorties, et la sortie est également prise en différentiel entre des ports de sortie congruents desdits réseaux à deux ports. (Fig. 13c)

**22.** Système de transmission ou de distribution optique selon la revendication 19 ou 20, dans lequel lesdits réseaux à simple port comportent une connexion en parallèle d'une diode et d'une résistance, et des moyens pour polariser les deux diodes dans leurs zones actives de fonctionnement.

**23.** Système de transmission ou de distribution optique selon la revendication 22, dans lequel lesdits moyens de polarisation comprennent une tension de réglage aux bornes du chemin incluant deux diodes, pour régler le coefficient de troisième ordre de la série de Taylor sur une plage de fonctionement et une tension de réglage à mi-chemin entre les diodes afin de régler le coefficient de Taylor du second ordre à une valeur pratiquement nulle.

24. Système de transmission ou de distribution optique selon la revendication 2, dans lequel lesdits réseaux à double port comprennent chacun:

un transistor bipolaire à jonction avec une chaine de N diodes connectées à sa base, une chaine de M-1 diodes connectées à son émetteur, et une résistance de charge connectée à son collecteur,

des moyens pour extraire la sortie sous la forme de tension différentielle entre les deux collecteurs desdits deux transistors, et

des moyens pour polariser le transistor dans sa plage de fonctionement active et pour polariser la combinaison de deux réseaux à double port sur une caractéristique à onde impaire, et dans lequel ledit système de transmission ou de distribution optique comporte en outre une excursion à courant différentiel pilotant avec des polarités de courant opposées lesdites chaines de diodes qui sont connectées aux bases de transistors dans lesdits deux réseaux à double port. (Fig. 16)

25. Système de transmission ou de distribution optique selon la revendication 24, dans lequel N=2 et M=3, entraînant typiquement une caractéristique de transfert qui fournit une bonne approximation de la caractéristique en arcsinus idéalement requise pour supprimer tous les ordres de distortion pour un pilotage sinusoïdal idéal desdits moyens de modulation.

26. Système de transmission ou de distribution optique selon la revendication 1, 2, 3 ou 4, dans lequel lesdits moyens pour diriger une partie de la puissance optique transmise vers ledit récepteur de surveillance comportent un diviseur global de faisceau optique ou un branchement ou coupleur à fibre optique.

27. Système de transmission ou de distribution optique selon la revendication 1, 2, 3, ou 4, dans lequel lesdits moyens pour diriger une partie de la puissance optique transmise vers ledit récepteur de surveillance comportent un branchement ou coupleur optique intégré disposé sur le même substrat optique intégré que ledit modulateur optique intégré.

28. Système de transmission ou de distribution optique selon la revendication 1, 2, 3, ou 4, dans lequel lesdits moyens pour extraire les signaux d'erreur comportent des détecteurs de distortion harmonique comprenant des circuits électroniques de détection synchrones, cohérents ou à verrouillage, comprenant un moyen de démodulation effectuant une multiplication, un hachage ou une commutation du signal d'entrée à l'aide d'un signal de référence relié de façon harmonique à la distortion en fréquence en cas de test, et un filtrage passe-bas subséquent. (Fig. 10)

29. Système de transmission ou de distribution optique selon les revendications 1 et 28, dans lequel le signal de référence pour le détecteur de distortion de second ordre comporte une fréquence égale à une somme ou une différence de deux fréquences fondamentales du signal de pilotage, et dans lequel le signal de référence pour le détecteur de distortion de troisième ordre comporte une fréquence de référence égale à $\pm 2w_1 \pm w_2$ ou $\pm w_1 \pm 2w_2$ dans le cas de deux signaux de pilotage, où $\pm w_1 \pm w_2 \pm w_3$ dans le cas de trois signaux de pilotage, où $w_1$, $w_2$, et $w_3$ sont les fréquences fondamentales des tonalités de pilotage.

30. Système de transmission ou de distribution optique selon la revendication 1, dans lequel lesdits moyens de traitement électronique sont chacun réalisés sous la forme de filtres passe-bas bouclés, dont chacun est connecté à une sortie d'un desdits moyens d'extraction des signaux d'erreur.

31. Système de transmission ou de distribution optique selon la revendication 1, dans lequel ledit signal de modulation comporte un signal analogique à large bande.

32. Système de transmission ou de distribution optique selon la revendication 1, dans lequel ledit signal de modulation comporte un signal multicanal multiplexé à division de fréquence combinant une pluralité de signaux à canal unique.

33. Système de transmission ou de distribution optique selon la revendication 32, dans lequel lesdits signaux à canal unique sont constitués par des signaux AM/VSB ou d'autres formats de signaux à modulation vidéo.

**34.** Système de transmission ou de distribution optique selon la revendication 1, dans lequel ledit signal de modulation est constitué par un signal numérique.

**35.** Système de transmission ou de distribution optique selon la revendication 33, dans lequel les signaux à canal unique sont constitués par des signaux numériques.

**36.** Système de transmission ou de distribution optique selon la revendication 1, dans lequel ledit signal de modulation est constitué par un signal numérique à spectre étendu.

**37.** Système de transmission ou de distribution optique selon la revendication 1, dans lequel lesdits moyens de préconditionnement électronique comportent une caractéristique de transfert ayant un facteur de forme pratiquement identique à l'inverse de la caractéristique de transfert desdits moyens de modulation, de sorte que ledit système à réaction paramétrique agit automatiquement de manière à supprimer ou diminuer les ordres de distortion harmonique ou d'intermodulation supérieurs au troisième, à chaque fois qu'il agit pour supprimer les coefficients de la série de Taylor globalement non linéaire allant jusqu'au troisième ordre, en vertu de l'opération de réaction paramétrique sur la seconde et troisième harmoniques.

**38.** Système de transmission ou de distribution optique selon la revendication 2, dans lequel ledit laser à onde continue comporte un laser à état solide à pompage par diode, ou un laser à semiconducteur à réaction distribuée.

**39.** Système de transmission ou de distribution optique selon la revendication 4, dans lequel ledit laser modulable directement comporte un laser à semiconducteur à réaction distribuée, ou un laser à cavité externe ou un laser Fabri-Perot à semiconducteur.

FIG. 1 ( PRIOR ART )

FIG. 2 (PRIOR ART )

FIG. 3 (PRIOR ART )

30

OUTPUT
INTENSITY

"ON"
STATE

A

QUADRATURE
(i.e. LINEAR
POINT OF
OPERATION)

Q

B

"OFF"
STATE

APPLIED
VOLTAGE

FIG. 4 (PRIOR ART)

OPTICAL
SOURCE

OUTPUT

V(t)

OUTPUT

ELECTRODES

FIG. 5 (PRIOR ART)

OPTICAL SOURCE

OUTPUT

OUTPUT

V(t)

ELECTRODES

*FIG. 6 (PRIOR ART)*

OPTICAL SOURCE

OUTPUT

OUTPUT

Vb    V(t)    ELECTRODES    Vb

*FIG. 7a (PRIOR ART)*

*FIG. 7b*

OPTICAL SOURCE

V(t)

FIG. 8

FIG. 9

SYNCHRONOUS HARMONIC DETECTOR

INPUT

LOCK-IN DETECTOR  1001

MIXER

LPF

1002

1003

REFERENCE
FREQUENCY

OUTPUT

PHASE SHIFTER  1004

1000

*FIG. 10*

2D ORDER
DISTORTION
DETECTOR

2 $f_0$

2D ORDER
COEFFICIENT
CONTROL

$P_2$

PRE-DISTORTION
NETWORK

1203

$P_3$

1201

3D ORDER
COEFFICIENT
CONTROL

1200

*FIG. 12*

FIG. 11

$(\beta_1, \beta_3)$

MODULATING MEANS 902

DC-CONTROL WITH ELECTRODES ON THE MODULATING MEANS

OR

BIAS $T_{CC}$

2ND ORDER PARAMETRIC TUNING

MODULATION DRIVER

1108

G

AMP

P'

TUNABLE GAIN 1107

THIS PATH

AND/OR

THIS PATH

LINEARIZED PRE-DISTORTION NETWORK

P

PARAMETRIC CONTROL OF 3RD ORDER DISTORTION

THIRD-ORDER PARAMETRIC TUNING

$(\alpha_1, \alpha_3)$

1106

1105

1104

906

AMP

BROADBAND INPUT

PILOT TONE INPUT

LOOP FILTER 1101

907

LOOP FILTER 1102

908

LOOP PROCESSOR 909

1103

EP 0 407 919 B1

35

FIG. 13a

FIG. 13b

FIG. 13c

FIG. 14

FIG. 15

FIG. 16

FIG. 17

$$Y(x) = \frac{(1 + x)^{2/3} - (1 - x)^{2/3}}{(1 + x)^{2/3} - (1 - x)^{2/3}}$$

FIG. 18a

$$Y = T$$
$$X = SIN \left[ \frac{\pi t}{2} \right]$$
$$Y = \frac{2}{\pi} ARCSIN [X]$$

FIG. 18 b

$$\frac{2}{\pi} ARCSIN [x]$$

$$Y[X] = \frac{(1 + x)^{2/3} - (1-x)^{2/3}}{(1 + x)^{2/3} + (1-x)^{2/3}}$$

FIG. 18c

40

FIG. 19